# EUROPEAN PATENT APPLICATION

(11) **EP 4 542 383 A1**
(43) Date of publication of application: **23.04.2025**
(21) Application number: 23838838.3
(22) Date of filing: 06.07.2023
(51) Int. Cl.: G06F 9/48, G06F 9/451, G06F 9/54, G06F 3/14

(54) **TASK MIGRATION METHOD, ELECTRONIC DEVICE, AND SYSTEM**

(30) Priority: 13.07.2022 CN 202210821297
(71) Applicant: Huawei Technologies Co., Ltd., Shenzhen, Guangdong 518129 (CN)
(72) Inventor: YANG, Mingliang, Shenzhen, Guangdong 518129 (CN)
(74) Representative: Körber, Martin Hans
(86) International application number: PCT/CN2023/106098
(87) International publication number: WO 2024/012346

(57) **Abstract**

Embodiments of this application provide a task migration method and system, and an electronic device. The method includes: A second electronic device displays a proxy message notification on a screen of the second electronic device in response to displaying a message notification on a screen of a first electronic device, where the proxy message notification is generated based on the message notification, and has a correspondence with the message notification; and the second electronic device displays, on the screen of the second electronic device in response to an operation of tapping the proxy message notification by a user, an application APP page corresponding to the message notification on the first electronic device. In this way, when the user is using the second electronic device, the user can synchronously receive the message notification on the first electronic device, and trigger task migration between the second electronic device and the first electronic device by tapping the proxy message notification on the second electronic device. This improves user experience.

## Description

This application claims priority to Chinese Patent Application No. 202210821297.2, filed with the China National Intellectual Property Administration on July 13, 2022 and entitled "TASK MIGRATION METHOD AND SYSTEM, AND ELECTRONIC DEVICE", which is incorporated herein by reference in its entirety.

### TECHNICAL FIELD

Embodiments of this application relate to the field of task migration, and more specifically, to a task migration method and system, and an electronic device.

### BACKGROUND

Currently, with popularization of electronic devices, people are increasingly dependent on the electronic devices in work and life, and have increasingly high requirements for cross-device use of applications (applications, APPs).

### SUMMARY

This application provides a task migration method and system, and an electronic device. According to the method, when a user is using a second electronic device, the user can synchronously receive a message notification on a first electronic device, and trigger a task migration procedure by tapping a corresponding proxy message notification on the second electronic device. This improves user experience.

According to a first aspect, a task migration method is provided. The method includes: A second electronic device displays a proxy message notification on a screen of the second electronic device in response to displaying a message notification on a screen of a first electronic device, where the proxy message notification is generated based on the message notification, and has a correspondence with the message notification; and the second electronic device displays, on the screen of the second electronic device in response to an operation of tapping the proxy message notification by a user, an application APP page corresponding to the message notification on the first electronic device.

It should be understood that the first electronic device and the second electronic device are bound to each other, and a communication connection is established.

Optionally, the second electronic device sends a first request message to the first electronic device in response to the operation of tapping the proxy message notification by the user. The first request message is used to request to initiate task migration with the first electronic device. The second electronic device receives task migration data sent by the first electronic device in response to the first request message. The second electronic device displays, on the screen of the second electronic device based on the task migration data, the application APP page corresponding to the message notification on the first electronic device.

Optionally, the task migration data includes descriptive data and control data. The descriptive data includes data indicating a page corresponding to an APP that sends the message notification. The control data includes data indicating a coordinate location tapped by the user.

Optionally, the descriptive data may include data indicating a picture of the page corresponding to the APP that sends the message notification, data indicating a name of the APP, data indicating an icon of the APP, data indicating a version of the APP, and the like.

In this embodiment of this application, when the user is using the second electronic device, if the APP on the first electronic device sends the message notification, the second electronic device can synchronously receive the message notification (the proxy message notification). In addition, the user can trigger task migration with the first electronic device by tapping the message notification on the second electronic device, so that the APP page corresponding to the message notification is displayed on the screen of the second electronic device, and the message notification can be further processed on the second electronic device. In this way, the user can not only view a message notification on another device in time, but also initiate a task migration procedure by using the proxy message notification as an entry. This improves user experience.

In addition, when the user taps a proxy message notification on an electronic device that is being used, the electronic device that is being used sends a request message to an electronic device that sends a message notification, and a task migration procedure is started between the two electronic devices based on the request message. In this way, the task migration procedure is initiated based on the request message, so that devices that perform task migration can be more accurate, and inappropriate task migration between the devices can be avoided.

With reference to the first aspect, in a possible implementation, before the second electronic device displays, on the screen of the second electronic device in response to the operation of tapping the proxy message notification by the user, the application APP page corresponding to the message notification on the first electronic device, the method further includes: The second electronic device determines whether an object tapped by the user is the proxy message notification; and when the second electronic device determines that the object tapped by the user is the proxy message notification, the second electronic device further determines that the proxy message notification is from the first electronic device.

In embodiments of this application, when the user triggers task migration between the device by tapping the proxy message, it is first determined whether the object tapped by the user is the proxy message notification. When it is determined that the tapped object is the proxy message notification, a source device of the proxy message notification is further determined. In this way, task migration between the devices that is initiated due to incorrect identification of the device can be avoided, security performance of a migration process can be improved, and user experience can be further improved.

With reference to the first aspect, in a possible implementation, that a second electronic device displays a proxy message notification on a screen of the second electronic device includes: The second electronic device receives a first notification message sent by the first electronic device, where the first notification message includes first data, and first indication information indicates that the proxy message notification exists; and the second electronic device displays the proxy message notification on the screen of the second electronic device based on the first notification message.

Optionally, the first notification message further includes first indication information. The first indication information indicates that the proxy message notification exists.

In embodiments of this application, when the electronic device receives the message notification, the message notification is synchronously displayed on another electronic device that is bound to the electronic device and that is in an online state. In this way, the message notification can be synchronized between a plurality of electronic devices, so that the user can receive, in time, the message notification on the another electronic device that is bound to the currently used electronic device and that is in the online state. This improves user experience.

With reference to the first aspect, in a possible implementation, that the second electronic device displays the proxy message notification on the screen of the second electronic device based on the first notification message includes: The second electronic device creates the proxy message notification based on the first notification message; the second electronic device generates a second notification message based on the proxy message notification; and the second electronic device displays the proxy message notification on the screen of the second electronic device based on the second notification message.

Optionally, a display form of the proxy message notification may be different from a display form of the message notification. For example, if the display form of the message notification is a pop-up message notification, the display form of the proxy message notification may alternatively be a notification bar message notification or a floating message notification.

Optionally, the display forms of the proxy message notification and the message notification may be related to a situation in which the user currently uses the electronic device. For example, if the user is currently using a video function of the electronic device, the message notification/proxy message notification of the electronic device is preferably displayed in a notification bar form.

In embodiments of this application, the second electronic device creates the proxy message notification based on the received first notification message. Content of the proxy message notification is the same as content of the message notification, but display forms of the proxy message notification and the message notification may be different. Further, the display form of the proxy message notification may be automatically adapted to a specific use state of a corresponding electronic device. For example, when the user is using a video application, the display form of the message notification/proxy message notification of the electronic device is preferably the notification bar form. This avoids affecting viewing experience of the user as much as possible, and can further improve user experience.

With reference to the first aspect, in a possible implementation, the method further includes: In response to the operation of tapping the proxy message notification by the user, the second electronic device stops displaying the proxy message notification.

Optionally, a specific implementation in which the second electronic device stops displaying the proxy message notification may be: The second electronic device receives a second deletion message sent by the first electronic device, where the second deletion message is used to notify the second electronic device to stop displaying the proxy message notification; and in response to the second deletion message, the second electronic device stops displaying the proxy message notification.

In embodiments of this application, after the proxy message notification is tapped, the message notification or the proxy message notification displayed on the another device can be cleared in time. This avoids unnecessary disturbance to the user, and further improves user experience.

According to a second aspect, a task migration method is provided. The method includes: A first electronic device displays a message notification on a screen of the first electronic device, and triggers displaying a proxy message notification on a screen of a second electronic device, where the proxy message notification is generated based on the message notification, and has a correspondence with the message notification; and in response to an operation of tapping, by a user, the proxy message notification displayed on the screen of the second electronic device, the first electronic device creates an application APP page corresponding to the message notification on the first electronic device, where the application APP page is to be displayed by the second electronic device on the screen of the second electronic device.

Optionally, the first electronic device and the second electronic device are bound to each other, and a communication connection is established.

Optionally, content of the proxy message notification is the same as content of the message notification.

In this embodiment of this application, when the user is using the second electronic device, if an APP on the first electronic device sends the message notification, the second electronic device can synchronously receive the message notification (the proxy message notification). In addition, the user can trigger task migration with the first electronic device by tapping the message notification on the second electronic device, so that the APP page corresponding to the message notification is displayed on the screen of the second electronic device, and the message notification can be further processed on the second electronic device. In this way, the user can not only view a message notification on another device in time, but also initiate a task migration procedure by using the proxy message notification as an entry. This improves user experience.

With reference to the second aspect, in a possible implementation, the method further includes: The first electronic device receives a first request message sent by the second electronic device, where the first request message is sent by the second electronic device in response to the operation of tapping, by the user, the proxy message notification displayed on the screen of the second electronic device, the first request message is used to request to initiate task migration with the first electronic device, the proxy message notification is generated based on the message notification, and has the correspondence with the message notification; and the first electronic device sends task migration data to the second electronic device in response to the first request message, where the task migration data is used by the second electronic device to display, on the screen of the second electronic device, the application APP page corresponding to the message notification on the first electronic device.

Optionally, the task migration data includes descriptive data and control data. The descriptive data includes data indicating a page corresponding to the APP that sends the message notification. The control data includes data indicating a coordinate location tapped by the user.

Optionally, the descriptive data may include data indicating a picture of the page corresponding to the APP that sends the message notification, data indicating a name of the APP, data indicating an icon of the APP, data indicating a version of the APP, and the like.

In this embodiment of this application, when the user is using the second electronic device, if the APP on the first electronic device sends the message notification, the second electronic device can synchronously receive the message notification (the proxy message notification). In addition, the user can trigger task migration with the first electronic device by tapping the message notification on the second electronic device, so that the APP page corresponding to the message notification is displayed on the screen of the second electronic device, and the message notification can be further processed on the second electronic device. In this way, the user can not only view the message notification on the another device in time, but also initiate the task migration procedure by using the proxy message notification as the entry. This improves user experience.

With reference to the second aspect, in a possible implementation, the method further includes: The first electronic device sends a first notification message to the second electronic device in response to displaying, by the first electronic device, the message notification on the screen of the first electronic device, where the first notification message is used by the second electronic device to display the proxy message notification on the screen of the second electronic device, the first notification message includes first data, and the first data is data related to the proxy message notification.

Optionally, the first notification message includes first indication information. The first indication information indicates that the proxy message notification exists.

Optionally, the first notification message is used by the second electronic device to display the proxy message notification on the screen of the second electronic device.

In embodiments of this application, when an electronic device receives the message notification, the message notification is synchronously displayed on another electronic device that is bound to the electronic device and that is in an online state. In this way, the message notification can be synchronized between a plurality of electronic devices, so that the user can receive, in time, the message notification on the another electronic device that is bound to the currently used electronic device and that is in the online state. This improves user experience.

With reference to the second aspect, in a possible implementation, the method further includes: In response to the first request message, the first electronic device stops displaying the message notification.

It may also be described as follows: In response to the operation of tapping the proxy message notification by the user, the first electronic device stops displaying the message notification.

In embodiments of this application, after the proxy message notification is tapped, the message notification displayed on the device that sends the message notification can be cleared in time. This avoids unnecessary disturbance to the user, and further improves user experience.

With reference to the second aspect, in a possible implementation, the method further includes: The first electronic device sends a second deletion message to the second electronic device in response to the first request message, where the second deletion message is used to notify the second electronic device to stop displaying the proxy message notification.

It may also be described as follows: The first electronic device sends the second deletion message to the second electronic device in response to the operation of tapping the proxy message notification by the user, where the second deletion message is used to notify the second electronic device to stop displaying the proxy message notification.

In embodiments of this application, after the proxy message notification is tapped, the proxy message notification displayed on the another device can be cleared in time. This avoids unnecessary disturbance to the user, and further improves user experience.

With reference to the second aspect, in a possible implementation, before the first electronic device sends the task migration data to the second electronic device, the method further includes: When the APP is in a started state on the first electronic device, the first electronic device controls the APP to jump to the APP page corresponding to the message notification, and displays the APP page.

With reference to the second aspect, in a possible implementation, before the first electronic device sends the task migration data to the second electronic device, the method further includes: When the APP is not in the started state on the first electronic device, the first electronic device starts the APP and jumps to the APP page corresponding to the message notification.

That an electronic device A is in an on state means that an operation interface corresponding to the APP is being displayed on a display of the electronic device A.

That the electronic device A is not in the on state means that the operation interface corresponding to the APP is not displayed on the display of the electronic device A. More specifically, it may mean that the APP is running in a background, or it may mean that the APP is in a closed state and does not run.

In embodiments of this application, after the user taps the proxy message notification displayed on the second electronic device, the first electronic device controls the APP to jump to the APP page specified by/corresponding to the message notification, and the APP page is further displayed on the second electronic device. In this way, the user can perform a further operation on the proxy message notification on the second electronic device.

According to a third aspect, an electronic device is provided. The electronic device is a second electronic device. The electronic device includes: a second system user interface module, configured to display a proxy message notification on a screen of the electronic device in response to displaying a message notification on a screen of a first electronic device, where the proxy message notification is generated based on the message notification, and has a correspondence with the message notification; and a second task migration module, configured to display, on the screen of the electronic device in response to an operation of tapping the proxy message notification by a user, an application APP page corresponding to the message notification on the first electronic device.

It should be understood that the first electronic device and the electronic device are bound to each other, and a communication connection is established.

Optionally, the second task migration module is specifically configured to: send a first request message to the first electronic device in response to the operation of tapping the proxy message notification by the user, where the first request message is used to request to initiate task migration with the first electronic device; receive task migration data sent by the first electronic device in response to the first request message; and display, on the screen of the second electronic device based on the task migration data, the application APP page corresponding to the message notification on the first electronic device.

Optionally, a display form of the proxy message notification may be different from a display form of the message notification. For example, if the display form of the message notification is a pop-up message notification, the display form of the proxy message notification may alternatively be a notification bar message notification or a floating message notification.

Optionally, the display forms of the proxy message notification and the message notification may be related to a situation in which the user currently uses the electronic device. For example, if the user is currently using a video function of the electronic device, the message notification/proxy message notification of the electronic device is preferably displayed in a notification bar form.

Optionally, the task migration data includes descriptive data and control data. The descriptive data includes data indicating a page corresponding to an APP that sends the message notification. The control data includes data indicating a coordinate location tapped by the user.

Optionally, the descriptive data may include data indicating a picture of the page corresponding to the APP that sends the message notification, data indicating a name of the APP, data indicating an icon of the APP, data indicating a version of the APP, and the like.

In this embodiment of this application, when the user is using the electronic device, if the APP on the first electronic device sends the message notification, the electronic device can synchronously receive the message notification (the proxy message notification). In addition, the user can trigger task migration with the first electronic device by tapping the message notification on the electronic device, so that the APP page corresponding to the message notification is displayed on the screen of the electronic device, and the message notification can be further processed on the electronic device. In this way, the user can not only view a message notification on another device in time, but also initiate a task migration procedure by using the proxy message notification as an entry. This improves user experience.

In addition, when the user taps the proxy message notification on the electronic device that is being used, the electronic device that is being used sends a request message to an electronic device that sends a message notification, and a task migration procedure is started between the two electronic devices based on the request message. In this way, the task migration procedure is initiated based on the request message, so that devices that perform task migration can be more accurate, and inappropriate task migration between the devices can be avoided.

With reference to the third aspect, in a possible implementation, the electronic device further includes a determining module, configured to: before responding to the operation of tapping the proxy message notification by the user, determine whether an object tapped by the user is the proxy message notification; and further configured to: when determining that the object tapped by the user is the proxy message notification, further determine that the proxy message notification is from the first electronic device.

In embodiments of this application, when the user triggers task migration between the devices by tapping the proxy message, it is first determined whether the object tapped by the user is the proxy message notification. When it is determined that the tapped object is the proxy message notification, a source device of the proxy message notification is further determined. In this way, task migration between the devices that is initiated due to incorrect identification of the device can be avoided, security performance of a migration process can be improved, and user experience can be further improved.

With reference to the third aspect, in a possible implementation, the second task migration module is further specifically configured to receive a first notification message sent by the first electronic device, where the first notification message includes first data, and the first data is data related to the proxy message notification. The second system user interface module is specifically configured to display the proxy message notification on the screen of the electronic device based on the first notification message.

Optionally, the first notification message further includes first indication information. The first indication information indicates that the proxy message notification exists.

In embodiments of this application, when the electronic device receives the message notification, the message notification is synchronously displayed on another electronic device that is bound to the electronic device and that is in an online state. In this way, the message notification can be synchronized between a plurality of electronic devices, so that the user can receive, in time, the message notification on the another electronic device that is bound to the currently used electronic device and that is in the online state. This improves user experience.

With reference to the third aspect, in a possible implementation, the second task migration module is further configured to create the proxy message notification based on the first notification message. The electronic device further includes a second notification management module, configured to generate a second notification message based on the proxy message notification. The second system user interface module is specifically configured to display the proxy message notification on the screen of the electronic device based on the second notification message.

Optionally, the display form of the proxy message notification may be different from the display form of the message notification. For example, if the display form of the message notification is a pop-up message notification, the display form of the proxy message notification may alternatively be the notification bar message notification or the floating message notification.

Optionally, the display forms of the proxy message notification and the message notification may be related to a situation in which the user currently uses the electronic device. For example, if the user is currently using the video function of the electronic device, the message notification/proxy message notification of the electronic device is preferably displayed in the notification bar form.

In embodiments of this application, the electronic device creates the proxy message notification based on the received first notification message. Content of the proxy message notification is the same as content of the message notification, but display forms of the proxy message notification and the message notification may be different. Further, the display form of the proxy message notification may be automatically adapted to a specific use state of a corresponding electronic device. For example, when the user is using a video application, the display form of the message notification/proxy message notification of the electronic device is preferably the notification bar form. This avoids affecting viewing experience of the user as much as possible, and can further improve user experience.

With reference to the third aspect, in a possible implementation, the second system user interface is further configured to: in response to the operation of tapping the proxy message notification by the user, stop displaying the proxy message notification.

Optionally, the second system user interface is further specifically configured to: receive a second deletion message sent by the first electronic device, where the second deletion message is used to notify the electronic device to stop displaying the proxy message notification; and in response to the second deletion message, stop displaying the proxy message notification.

In embodiments of this application, after the proxy message notification is tapped, the message notification or the proxy message notification displayed on the another device can be cleared in time. This avoids unnecessary disturbance to the user, and further improves user experience.

According to a fourth aspect, an electronic device is provided. The electronic device is a first electronic device. The electronic device includes: a first system user interface module, configured to: display a message notification on a screen of the electronic device, and trigger displaying a proxy message notification on a screen of a second electronic device, where the proxy message notification is generated based on the message notification, and has a correspondence with the message notification; and an application APP, used to create, in response to an operation of tapping, by a user, the proxy message notification displayed on the screen of the second electronic device, an application APP page corresponding to the message notification on the first electronic device, where the APP page is to be displayed by the second electronic device on the screen of the second electronic device.

Optionally, the electronic device and the first electronic device are bound to each other, and a communication connection is established.

Optionally, content of the proxy message notification is the same as content of the message notification.

In this embodiment of this application, when the user is using the second electronic device, if an APP on the first electronic device sends the message notification, the second electronic device can synchronously receive the message notification (the proxy message notification). In addition, the user can trigger task migration with the first electronic device by tapping the message notification on the second electronic device, so that the APP page corresponding to the message notification is displayed on the screen of the second electronic device, and the message notification can be further processed on the second electronic device. In this way, the user can not only view a message notification on another device in time, but also initiate a task migration procedure by using the proxy message notification as an entry. This improves user experience.

With reference to the fourth aspect, in a possible implementation, the electronic device further includes a first task migration module, configured to receive a first request message sent by the second electronic device, where the first request message is sent by the second electronic device in response to the operation of tapping, by the user, the proxy message notification displayed on the screen of the second electronic device, the first request message is used to request to initiate task migration with the electronic device, and content of the proxy message notification is the same as content of the message notification. The first task migration module is further configured to send task migration data to the second electronic device in response to the first request message, where the task migration data is used by the second electronic device to display, on the screen of the second electronic device, the application APP page corresponding to the message notification on the electronic device.

Optionally, the task migration data includes descriptive data and control data. The descriptive data includes data indicating a page corresponding to the APP that sends the message notification. The control data includes data indicating a coordinate location tapped by the user.

Optionally, the descriptive data may include data indicating a picture of the page corresponding to the APP that sends the message notification, data indicating a name of the APP, data indicating an icon of the APP, data indicating a version of the APP, and the like.

Optionally, a display form of the proxy message notification may be different from a display form of the message notification. For example, if the display form of the message notification is a pop-up message notification, the display form of the proxy message notification may alternatively be a notification bar message notification or a floating message notification.

Optionally, the display forms of the proxy message notification and the message notification may be related to a situation in which the user currently uses the electronic device. For example, if the user is currently using a video function of the electronic device, the message notification/proxy message notification of the electronic device is preferably displayed in a notification bar form.

In this embodiment of this application, when the user is using the second electronic device, if an APP on another electronic device sends a message notification, the second electronic device can synchronously receive the message notification (a proxy message notification). In addition, the user can trigger task migration with the electronic device by tapping the message notification on the second electronic device, so that an APP page corresponding to the message notification is displayed on the screen of the second electronic device, and the message notification can be further processed on the second electronic device. In this way, the user can not only view the message notification on the another device in time, but also initiate a task migration procedure by using the proxy message notification as an entry. This improves user experience.

With reference to the fourth aspect, in a possible implementation, the first task migration module is further configured to send a first notification message to the second electronic device in response to displaying, by the electronic device, the message notification on the screen of the electronic device, where the first notification message is used by the second electronic device to display the proxy message notification on the screen of the second electronic device, the first notification message includes first data, and the first data is data related to the proxy message notification.

Optionally, the first notification message includes first indication information. The first indication information indicates that the proxy message notification exists.

In embodiments of this application, when the electronic device receives the message notification, the message notification is synchronously displayed on another electronic device that is bound to the electronic device and that is in an online state. In this way, the message notification can be synchronized between a plurality of electronic devices, so that the user can receive, in time, the message notification on the another electronic device that is bound to the currently used electronic device and that is in the online state. This improves user experience.

With reference to the fourth aspect, in a possible implementation, the first system user interface module is further configured to: in response to the first request message, stop displaying the message notification.

It may also be described as follows: The first system user interface module is further configured to: in response to the operation of tapping the proxy message notification by the user, stop displaying the message notification.

In embodiments of this application, after the proxy message notification is tapped, the message notification displayed on the device that sends the message notification can be cleared in time. This avoids unnecessary disturbance to the user, and further improves user experience.

With reference to the fourth aspect, in a possible implementation, the first task migration module is further configured to send a second deletion message to the second electronic device in response to the first request message, where the second deletion message is used to notify the second electronic device to stop displaying the proxy message notification.

It may also be described as follows: The first task migration module is further configured to send the second deletion message to the second electronic device in response to the operation of tapping the proxy message notification by the user, where the second deletion message is used to notify the second electronic device to stop displaying the proxy message notification.

In embodiments of this application, after the proxy message notification is tapped, the proxy message notification displayed on the another device can be cleared in time. This avoids unnecessary disturbance to the user, and further improves user experience.

According to a fifth aspect, an electronic device is provided. The electronic device includes a memory and a processor. The memory is configured to store computer program code. The processor is configured to execute the computer program code stored in the memory, to implement the method according to any one of the first aspect or the possible implementations of the first aspect.

According to a sixth aspect, an electronic device is provided. The electronic device includes a memory and a processor. The memory is configured to store computer program code. The processor is configured to execute the computer program code stored in the memory, to implement the method according to any one of the second aspect or the possible implementations of the second aspect.

According to a seventh aspect, a task migration system is provided. The system includes one or more electronic devices according to the fifth aspect, and one or more electronic devices according to the sixth aspect.

According to an eighth aspect, a chip is provided. The chip stores instructions. When the instructions are run on a device, the chip is enabled to perform the method according to any one of the first aspect or the possible implementations of the first aspect, or the chip is enabled to perform the method according to any one of the second aspect or the possible implementations of the second aspect.

According to a ninth aspect, a computer-readable storage medium is provided. The computer-readable storage medium stores a computer program or instructions. When the computer program or the instructions are executed, the method according to any one of the first aspect or the possible implementations of the first aspect is implemented, or the method according to any one of the second aspect or the possible implementations of the second aspect is implemented.

According to a tenth aspect, a computer program product is provided. When the computer program product runs on an electronic device, the electronic device is enabled to perform the method according to any one of the first aspect or the possible implementations of the first aspect, or the electronic device is enabled to perform the method according to any one of the second aspect or the possible implementations of the second aspect.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3(a) to FIG. 3(c) are an operation interface diagram of existing task migration between electronic devices according to an embodiment of this application;
FIG. 4(a) to FIG. 4(c) are an interface display diagram of task migration between electronic devices according to an embodiment of this application;
FIG. 5(a) to FIG. 5(d) are another interface diagram of task migration between electronic devices according to an embodiment of this application;
FIG. 6 is a schematic flowchart of a task migration method according to an embodiment of this application;
FIG. 7 is an information exchange diagram of implementing message notification synchronization between a plurality of electronic devices according to an embodiment of this application;
FIG. 8 is an information exchange diagram of implementing task migration between electronic devices according to an embodiment of this application;
FIG. 9 is an information exchange diagram corresponding to a message notification clearing method according to an embodiment of this application; and
FIG. 10 is a diagram of functional modules of a system for implementing task migration between devices according to an embodiment of this application.

### DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "multiple" or "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

A method provided in embodiments of this application may be applied to an electronic device, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

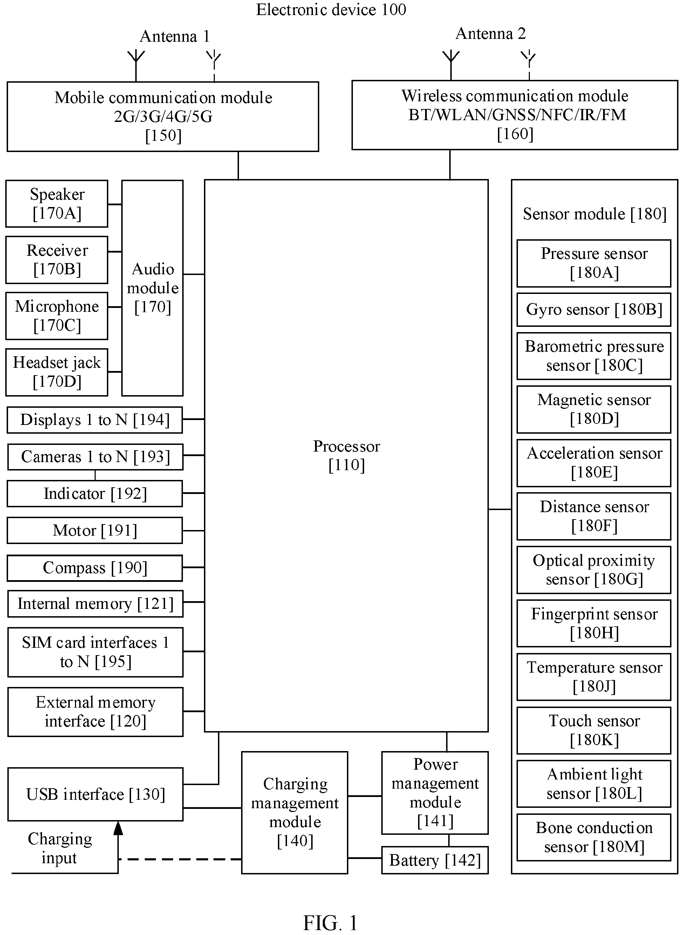

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some of the components, or split some of the components, or have different arrangements of the components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset, to play an audio through the headset. The interface may alternatively be configured to connect to another electronic device, for example, an AR device.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device via the power management module 141.

The power management module 141 is configured to connect to the battery 142, the charging management module 140, and the processor 110. The power management module 141 receives an input from the battery 142 and/or an input from the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transferred to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the electronic device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near-field communication, NFC), and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function via the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented via the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an APP required by at least one function (for example, a sound playing function or an image playing function), and the like. The data storage area may store data (such as audio data and a phone book) created during use of the electronic device 100, and the like. In addition, the internal memory 121 may include a high speed random access memory, or may include a non-volatile memory, for example, at least one magnetic disk storage device, a flash memory, or a universal flash storage (universal flash storage, UFS).

The electronic device 100 may implement an audio function, for example, music playing and recording, via the audio module 170, the speaker 170A, the receiver 170B, the microphone 170C, the headset jack 170D, the application processor, and the like.

The audio module 170 is configured to convert digital audio information into an analog audio signal output, and is also configured to convert analog audio input into a digital audio signal. The audio module 170 may be further configured to: encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode via the speaker 170A.

The receiver 170B, also referred to as an "earpiece", is configured to convert an audio electrical signal into a sound signal. When a call is answered or audio information is listened to through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change of the capacitance. When a touch operation is performed on the display 194, the electronic device 100 detects intensity of the touch operation via the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a messaging application icon, an instruction for viewing an SMS message is performed. When a touch operation whose touch operation intensity is greater than or equal to a first pressure threshold is performed on a messaging application icon, an instruction for creating a new SMS message is performed.

The gyro sensor 180B may be configured to determine a moving posture of the electronic device 100. In some embodiments, angular velocities of the electronic device 100 around three axes (namely, axes x, y, and z) may be determined via the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening or closing of a flip cover via the magnetic sensor 180D. In some embodiments, when the electronic device 100 is a flip phone, the electronic device 100 may detect opening or closing of the flip cover via the magnetic sensor 180D. Further, a feature like automatic unlocking of the flip cover is set based on a detected opening or closing state of the flip cover.

The acceleration sensor 180E may detect accelerations of the electronic device 100 in various directions (usually on three axes), may detect magnitude and a direction of gravity when the electronic device 100 is stationary, and may be further configured to recognize a posture of the electronic device, and is used in an application like switching between a landscape mode and a portrait mode or a pedometer.

The distance sensor 180F is configured to measure a distance. The electronic device 100 may measure the distance in an infrared manner or a laser manner. In some embodiments, in a photographing scene, the electronic device 100 may measure a distance via the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light via the light-emitting diode. The electronic device 100 detects infrared reflected light from a nearby object via the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing strategy using the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch control screen". The touch sensor 180K is configured to detect a touch operation on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (such as photographing and audio playing) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as a call and data communication. In some embodiments, the electronic device 100 uses an embedded-SIM (embedded-SIM, eSIM) card, namely, an embedded-SIM card. The eSIM card may be embedded in the electronic device 100, and cannot be separated from the electronic device 100.

It should be understood that a phone card in embodiments of this application includes but is not limited to the SIM card, the eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

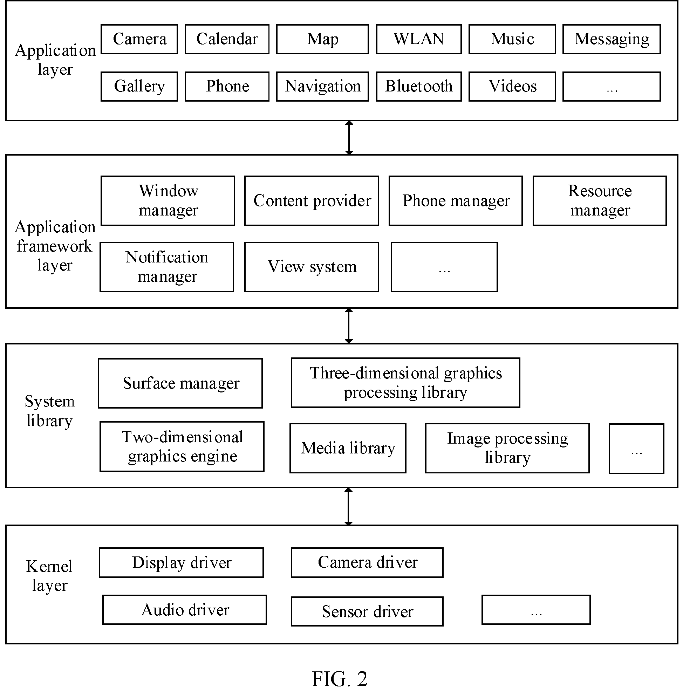

FIG. 2 is a block diagram of the software structure of the electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for the application at the application layer. The application framework layer includes some predefined functions.

As shown in FIG. 2, the application framework layer may include a window manager, a content provider, a view system, a phone manager, a resource manager, a notification manager, and the like.

The window manager is used to manage a window program. The window manager may obtain a size of the display, determine whether there is a status bar, perform screen locking, take a screenshot, and the like.

The content provider is used to store and obtain data, and enable the data to be accessed by an application. The data may include a video, an image, an audio, calls that are made and answered, a browse history, a bookmark, a phone book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is used to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, may be used to convey a notification message, and may automatically disappear after a short pause without requiring user interaction. For example, the notification manager is used to notify download completion and provide a message notification. The notification manager may alternatively be a notification that appears in a top status bar of the system in a form of a graph or a scroll bar text, for example, a notification of an application that runs in a background, or may be a notification that appears on a screen in a form of a dialog window. For example, text information is displayed in the status bar, an announcement is given, the electronic device vibrates, or an indicator light blinks.

The Android runtime includes a kernel library and a virtual machine. The Android runtime is responsible for scheduling and management of the Android system.

The kernel library includes two parts: a function that needs to be invoked in a Java language, and a kernel library of Android.

The application layer and the application framework layer run on the virtual machine. The virtual machine executes Java files at the application layer and the application framework layer as binary files. The virtual machine is used to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording in a plurality of commonly used audio and video formats, a static image file, and the like. The media library may support a plurality of audio and video encoding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

To understand the solutions provided in embodiments of this application more clearly, the following first describes task migration in this application in detail.

A task migration function of a device provides a user with seamless cross-device operation experience. For example, when operating an application (application, APP) on a device A, by triggering a task migration procedure between the device A and a device B, the user may continue to operate the APP on the device B. In addition, an interface of the APP displayed on the device B is consistent with an interface displayed on device A before task migration is triggered, and related data is also migrated synchronously. On this basis, the user continues to operate the APP, so that a seamless connection of the operation of the APP can be implemented, as if the APP always runs on the device B.

The APP may not be installed on the device B. In other words, a first APP is installed on the device A, and the first APP is not installed on the device B. By triggering task migration between the device A and the device B, the first APP can also be migrated to the device B, and then the APP continues to be operated on the device B.

Optionally, when the first APP is not installed on the device B, after task migration is triggered, an interface style of the first APP displayed on the device B is consistent with an interface style of the APP displayed on the device A.

Optionally, when the first APP is installed on the device B, after task migration is triggered, the interface style of the first APP displayed on the device B may be consistent with the interface style of the APP displayed on the device A, or may be consistent with the interface style of the APP installed on the device B.

It should be understood that, when the device B does not have account information of the device A, task migration between the device A and the device B may also be implemented.

An application scenario in embodiments of this application may be that the user triggers a task migration procedure using a message notification.

An electronic device in embodiments of this application may be a television, a desktop computer, or a notebook computer, or may be a portable electronic device like a mobile phone, a tablet computer, a camera, a video camera, or a video recorder, or may be an electronic device in a 5G network, an electronic device in a future evolved public land mobile network (public land mobile network, PLMN), or the like. This is not limited in this application.

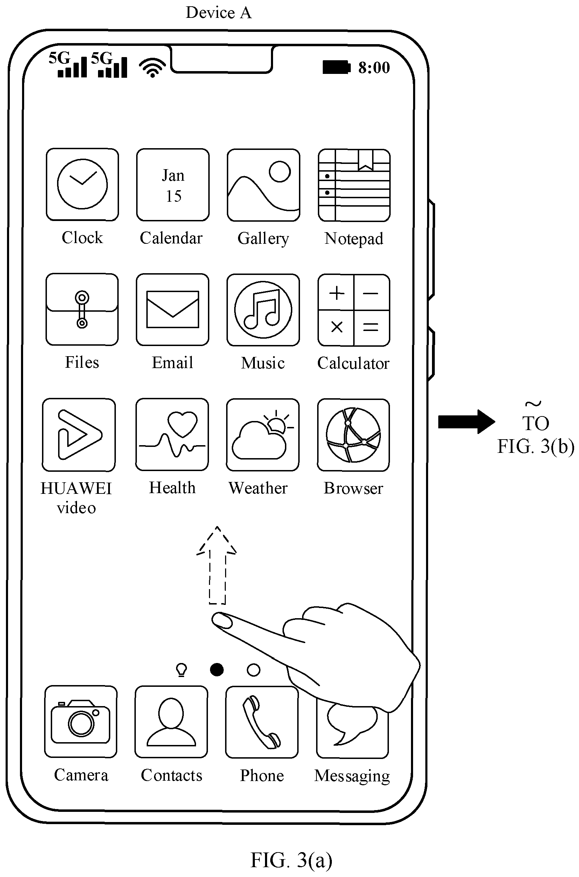

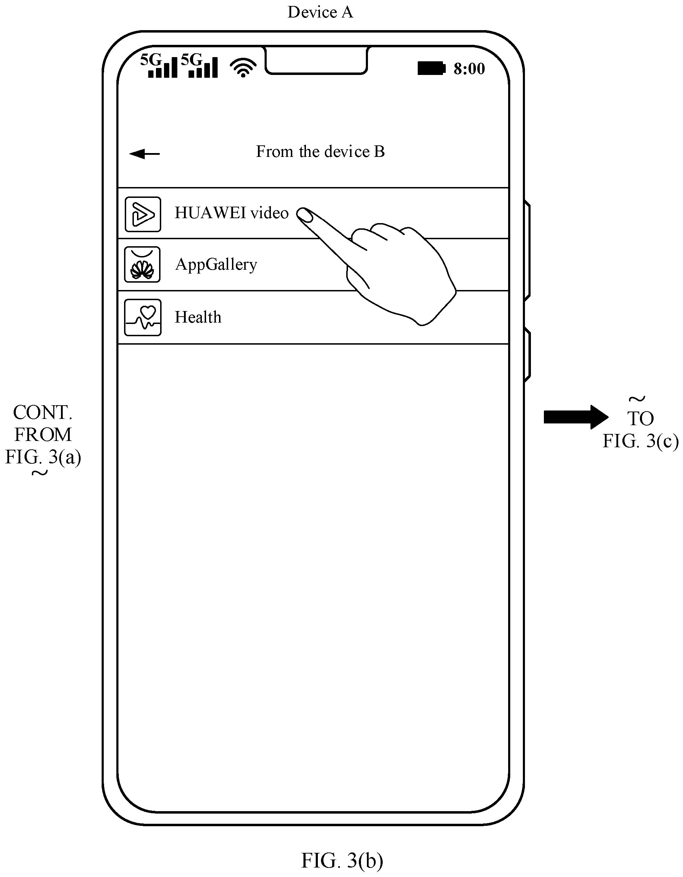

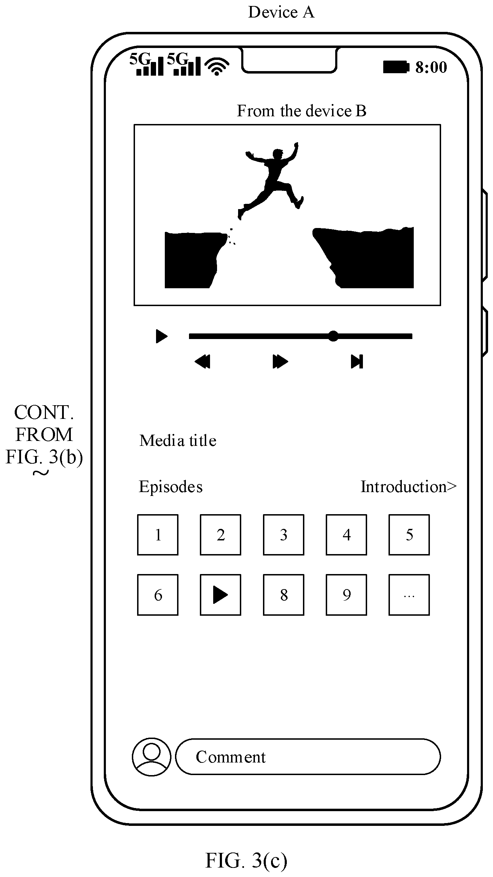

FIG. 3(a) to FIG. 3(c) are an operation interface diagram of existing task migration between electronic devices. As shown in FIG. 3(a) to FIG. 3(c), existing task migration between the electronic devices is performed by using a task center as an entry. When a user wants to migrate an APP that is running on an electronic device B (or a second electronic device) to an electronic device A (or a first electronic device), the user first needs to enter a task center of the electronic device A (for example, enter the task center of the electronic device A by using a gesture of sliding up from the bottom of a screen of the electronic device A, as shown in FIG. 3(a)). In this case, the electronic device A displays a list of APPs that are running on the electronic device B (as shown in FIG. 3(b)). The user selects, from the list, an APP on which task migration needs to be performed (for example, a HUAWEI video APP) (as shown in FIG. 3(b)), to trigger task migration between the electronic device A and the electronic device B. Then, the APP continues to run on the electronic device A. The method uses the task center of the device as the entry. However, the task center can display only the list of running APPs, and most message APPs display messages only in positions such as a notification bar through a message push service of a system and are not in a running state. Therefore, for APPs that are started by the user only when there are message notifications, for example, a messaging application and an email application, the user cannot perceive new message notifications on the device A in time when operating the device B, does not actively enter a task center of the device B to initiate a task migration procedure, and therefore cannot operate a corresponding APP in time.

In another solution for existing task migration between the electronic devices, a HUAWEI health APP may establish a binding relationship between a mobile phone and a watch or a band, monitor message notifications of APPs on the mobile phone, and forward, when detecting the message notifications, the message notifications in time to the watch or the band that establishes the binding relationship with the mobile phone. This implements synchronous display of the messages between the mobile phone and the watch or the band.

An application scenario of the method is limited only to synchronously displaying the message notification on the mobile phone on a smart wearable device like the watch or the band, and the message notification cannot be synchronized between two or more mobile phones. A device type and the application scenario are limited. In addition, the user can view only detailed content of the message notification on the watch or the band, and cannot directly operate a corresponding APP.

Therefore, current task migration is performed by using the task center as the entry, and task migration of the most message APPs cannot be implemented.

Therefore, a new task migration solution is urgently needed, to implement task migration of the most message APPs and improve user experience.

In view of this, this application provides a task migration method and an electronic device. According to the method, a message notification can be synchronized between a plurality of electronic devices, so that when using one electronic device, a user can view a message notification on another electronic device in time. In addition, the user may initiate a task migration procedure by using the message notification as an entry, and no longer depends on a task center. This can improve user experience.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" refer to one, two, or more. The term "and/or" is for describing an association relationship between associated objects and indicates that three relationships may exist. For example, A and/or B may indicate the following cases: Only A exists, both A and B exist, and only B exists, where A and B each may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, the statements "an embodiment", "some embodiments", "another embodiment", "some other embodiments", and the like that appear in different places in this specification do not necessarily mean referring to a same embodiment. Instead, the statements mean "one or more but not all of embodiments", unless otherwise specifically emphasized in another manner. The terms "include", "comprise", "have", and variants of the terms all mean "include but are not limited to", unless otherwise specifically emphasized in another manner.

To understand the solutions provided in embodiments of this application more clearly, before the specific solutions are described, a message notification and a proxy message notification in embodiments of this application are first described in detail.

### Message notification and proxy message notification:

In an example, an electronic device A and an electronic device B are bound to each other. A messaging APP on the electronic device A receives an SMS message, and displays an SMS message notification in a pop-up window form on a screen of the electronic device A. In this case, a notification corresponding to the SMS message notification is also displayed in the pop-up window form on a screen of the electronic device B. The SMS message notification is a message notification, and the notification corresponding to the SMS message notification is a proxy message notification.

### Association between the message notification and the proxy message notification:

The proxy message notification is originated from the message notification, and is generated based on the message notification. There is a correspondence between the proxy message notification and the message notification. For example, content of the proxy message notification is the same as content of the message notification corresponding to the proxy message notification.

### Differences between the message notification and the proxy message notification:

The differences between the proxy message notification and the message notification corresponding to the proxy message notification lie in that display carriers (which are respectively the electronic device B and the electronic device A in this embodiment) are different, and a display form of the proxy message notification may be different from a display form of the message notification. For example, if the display form of the message notification is a pop-up message notification, the display form of the proxy message notification may alternatively be a notification bar message notification or a floating message notification. A specific display form may be determined based on a situation in which a user is using an electronic device. For example, when the user is using the electronic device to play a game, the display form is a notification bar form instead of a pop-up window form.

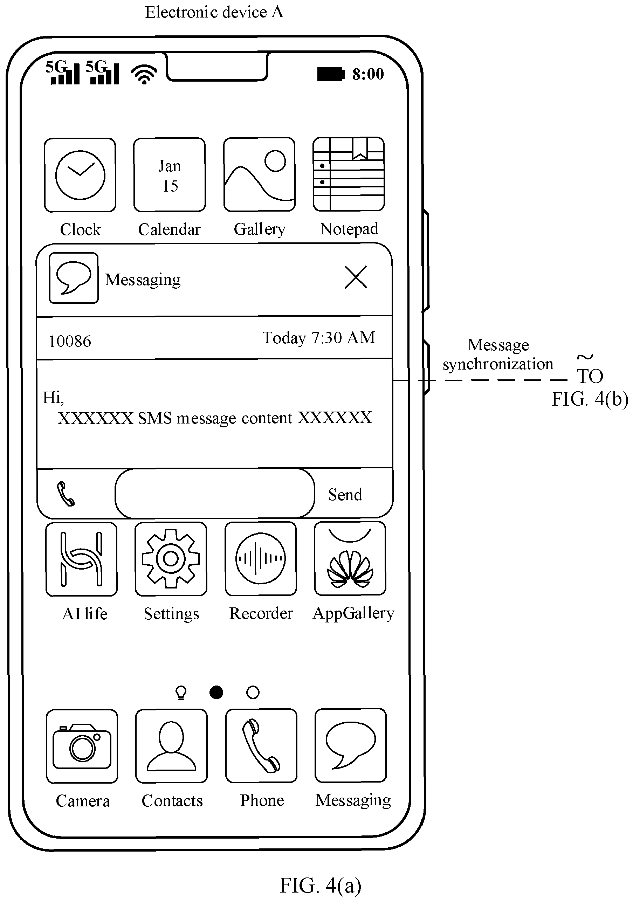

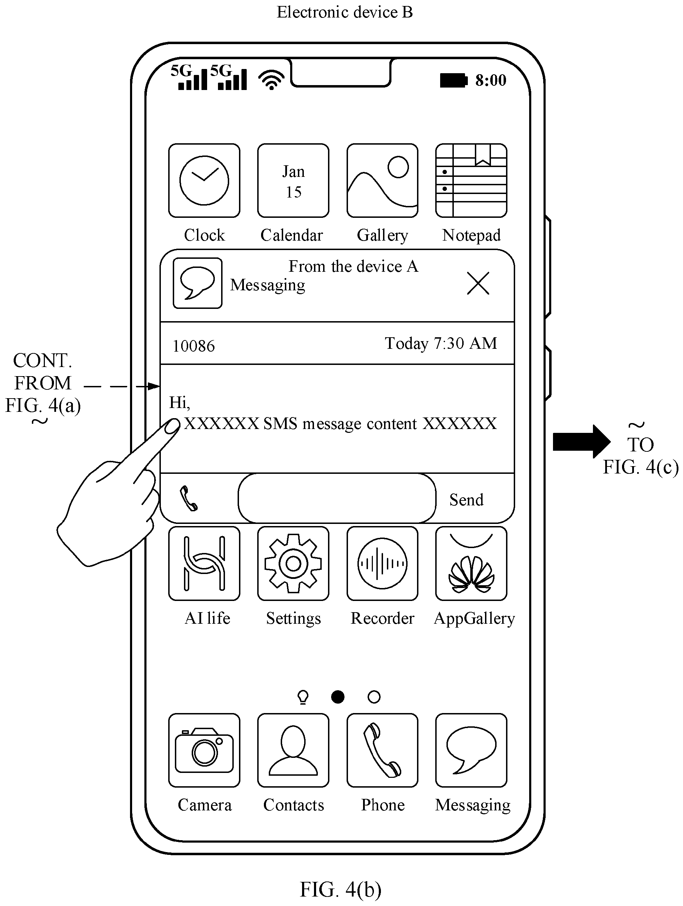

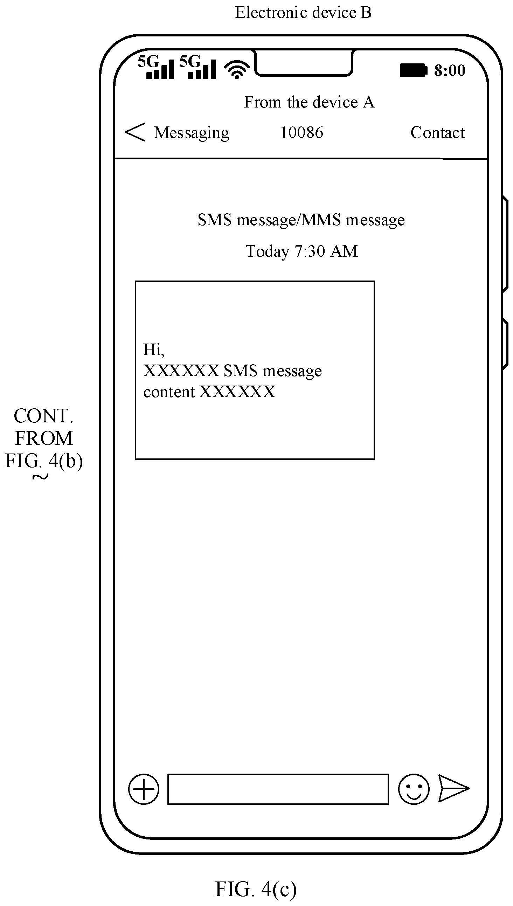

For example, FIG. 4(a) to FIG. 4(c) are an interface display diagram of task migration between electronic devices according to an embodiment of this application. As shown in FIG. 4(a) to FIG. 4(c), an electronic device A and an electronic device B are bound to each other. A user is using the electronic device B. When receiving a new message, an information APP on the electronic device A sends a corresponding message notification in a pop-up window form (as shown in FIG. 4(a)). In this case, the electronic device B also receives the message notification in the pop-up window form (as shown in FIG. 4(b)). In other words, message synchronization is implemented between the electronic device A and the electronic device B. When the user taps the message notification on the electronic device B, task migration between the electronic device A and the electronic device B can be triggered, that is, an APP page corresponding to the message notification is displayed on the electronic device B (the APP page corresponding to the message notification in this embodiment is an information page, as shown in FIG. 4(c)), so that the user performs a further operation on the electronic device B. When the user taps the message notification on the electronic device B, an operation of deleting the message notifications on the electronic device A and the electronic device B is automatically triggered.

It should be understood that a communication connection is established between the electronic device A and the electronic device B.

Optionally, both the electronic device A and the electronic device B are connected to a same local area network, or a Wi-Fi P2P connection is established between the electronic device A and the electronic device B, or the communication connection is established between the electronic device A and the electronic device B in another manner. This is not limited in this application.

Optionally, the message notification sent by the APP on the electronic device A may alternatively be in a form of a notification bar message notification or a floating message notification, or in another form. This is not limited in this application.

Optionally, the message notification that is synchronously displayed by the electronic device B may alternatively be in a form of a notification bar message notification or a floating message notification, or in another form. This is not limited in this application.

Optionally, the display form of the message notification on the electronic device B may be a form the same as the display form of the message notification on the electronic device A, or may be a preferred form preset by the user based on an actual situation, or may be a form automatically selected by a system based on a use scenario of the user, or may be another form. This is not limited in this application.

In an example, the system automatically selects the display form based on the use scenario of the user. For example, when the electronic device A receives a message notification displayed in a pop-up window form, the user is playing a game on the electronic device B. In this case, the electronic device B automatically selects, based on the use scenario of the user, a form that does not affect game experience of the user, for example, a notification bar or a floating window, to display the message notification.

Optionally, displaying the message notification in the pop-up window form, a notification bar form, or another form may be displaying specific content of the message notification, or may not be displaying the specific content, but displaying a notification like "You have new information" or "You have a new WeChat message".

Optionally, the electronic device A may be any one of a mobile phone, a tablet computer, a smart television, and a wearable smart device, or may be another electronic device. This is not limited in this application.

Similarly, the electronic device B may be any one of a mobile phone, a tablet computer, a smart television, and a wearable smart device, or may be another electronic device. This is not limited in this application.

It should be understood that the APP page corresponding to the message notification is specified by the APP on the electronic device A when the APP sends the message notification. In other words, before the electronic device A displays the message notification on a display of the electronic device A, a correspondence between the message notification and the APP page has been established, so that the APP page corresponding to the message notification can be determined based on the message notification. For example, in this embodiment, the message notification is sent by the information APP on the electronic device A, and the APP page corresponding to the message notification is the information page. In other words, the information page is specified by the information APP on the electronic device A when the information APP sends the message notification.

It should be understood that, in this embodiment, the message notification displayed on the electronic device B may also be referred to as a proxy message notification. Content of the proxy message notification is completely the same as content of the message notification corresponding to the proxy message notification, and differences lie in that display carriers (which are respectively the electronic device B and the electronic device A in this embodiment) are different, and the display form of the proxy message notification may be different from the display form of the message notification. For example, if the display form of the message notification is a pop-up message notification, the display form of the proxy message notification may alternatively be a notification bar message notification or a floating message notification.

In this embodiment of this application, when the user is using the electronic device B, if the APP on the electronic device A sends the message notification, the electronic device B that establishes a binding relationship with the electronic device A and that is connected to the same local area network can synchronously receive the message notification. In addition, the user can trigger task migration with the electronic device A by tapping the message notification on the electronic device B, so that the APP page corresponding to the message notification is displayed on a display interface of the electronic device B, and the message notification can be further processed on the electronic device B. In this way, the user can view a message notification on another device in time, and can initiate a task migration procedure by using the message notification as an entry. This improves user experience.

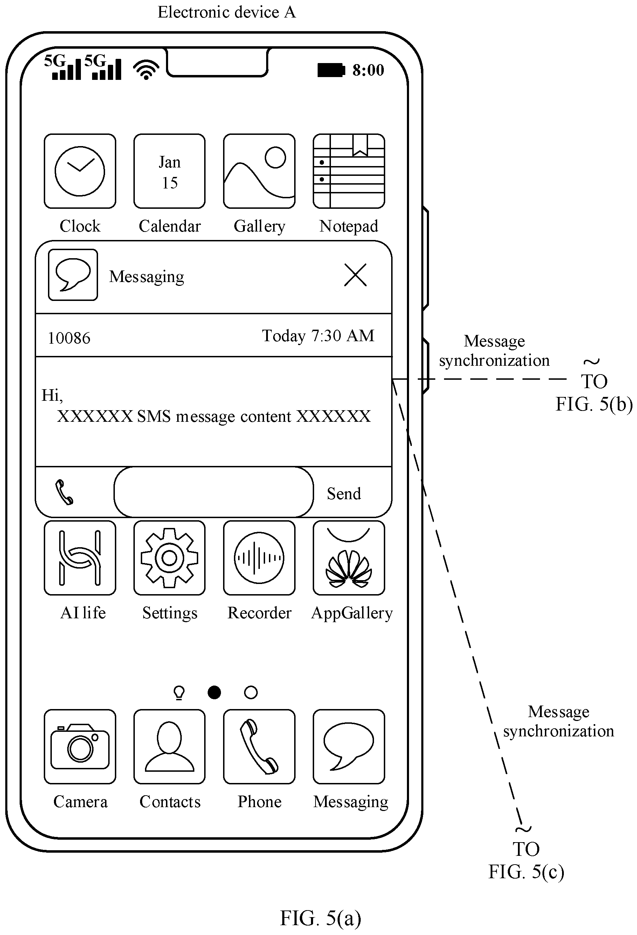

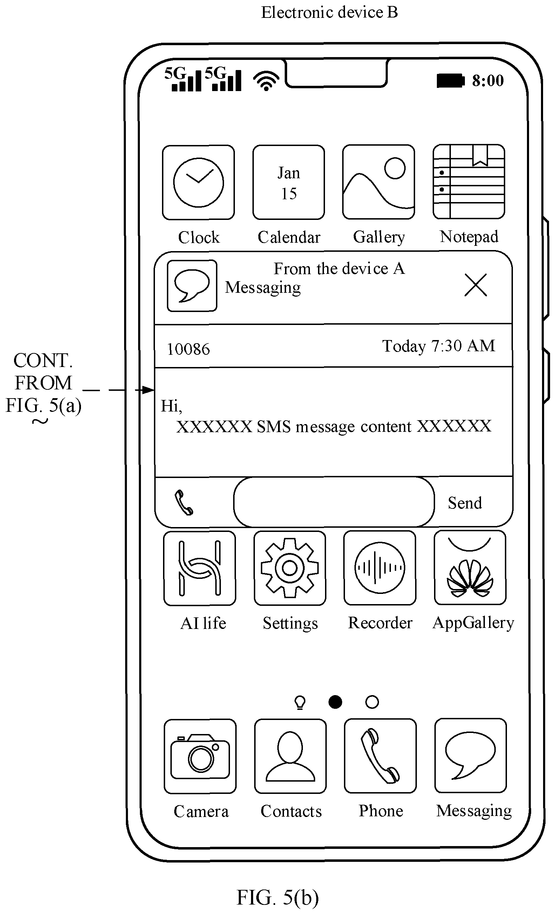

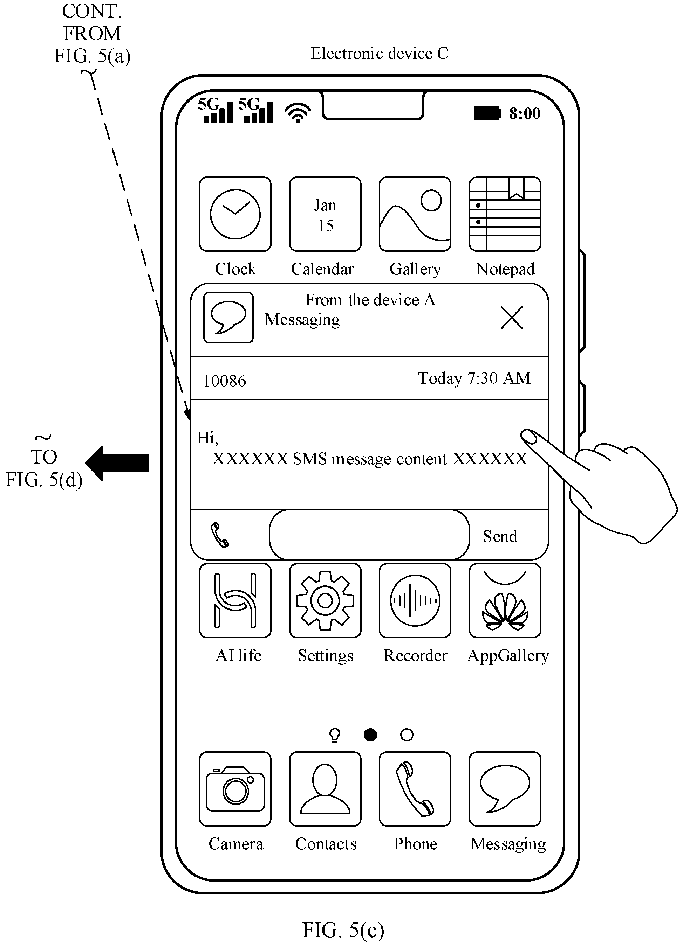

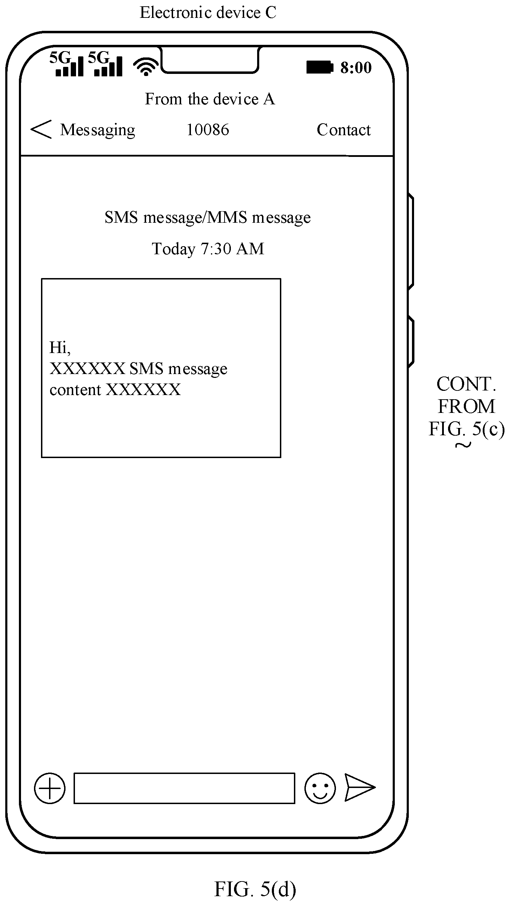

In parallel with the embodiment shown in FIG. 4(a) to FIG. 4(c), for example, FIG. 5(a) to FIG. 5(d) are another interface diagram of task migration between electronic devices according to an embodiment of this application. As shown in FIG. 4, an electronic device A and an electronic device B are bound to each other, and the electronic device A and an electronic device C are also bound to each other. A user is using the electronic device C. When receiving a new message, an information APP on the electronic device A sends a corresponding message notification in a pop-up window form (as shown in FIG. 5(a)). In this case, the electronic device B also receives the message notification in the pop-up window form (as shown in FIG. 5(b)). The electronic device C also receives the message notification in the pop-up window form (as shown in FIG. 5(c)), that is, message synchronization is implemented between the electronic device A and the electronic device B, and message synchronization is also implemented between the electronic device A and the electronic device C. When the user taps the message notification on the electronic device C, task migration between the electronic device A and the electronic device C can be triggered, that is, the electronic device C displays an APP page corresponding to the message notification (the APP page corresponding to the message notification in this embodiment is an information page, as shown in FIG. 5(d)), so that the user performs a further operation on the electronic device C.

When the user taps the message notification on the electronic device C, an operation of deleting the message notifications on the electronic device A, the electronic device B, and the electronic device C is automatically triggered.

Optionally, the message notification sent by the APP on the electronic device A may alternatively be in a form of a notification bar message notification or a floating message notification, or in another form. This is not limited in this application.

Optionally, the message notification that is synchronously displayed by the electronic device B may alternatively be in a form of a notification bar message notification or a floating message notification, or in another form. This is not limited in this application.

Optionally, the message notification that is synchronously displayed by the electronic device C may alternatively be in a form of a notification bar message notification or a floating message notification, or in another form. This is not limited in this application.

Optionally, the display form of the message notification on the electronic device B or the electronic device C may be a form the same as the display form of the message notification on the electronic device A, or may be a preferred form preset by the user based on an actual situation, or may be a form automatically selected by a system based on a use scenario of the user, or may be another form. This is not limited in this application.

In an example, the system automatically selects the display form based on the use scenario of the user. For example, when the electronic device A receives a message notification displayed in a pop-up window form, the user is playing a game on the electronic device B, and the electronic device C displays a lock screen page and is not used by any user. In this case, the electronic device B automatically selects, based on the use scenario of the user, a form that does not affect game experience of the user, for example, a notification bar or a floating window, to display the message notification, and the electronic device C may synchronously display the message notification in the pop-up window form.

Optionally, displaying the message notification in the pop-up window form, a notification bar form, or another form may be displaying specific content of the message notification, or may not be displaying the specific content, but displaying a notification like "You have new information" or "You have a new WeChat message".

Synchronization of a message notification between devices that are bound to each other and connected to a same local area network may be implemented via task migration modules located inside the electronic devices.

Optionally, establishing a binding relationship between the electronic devices may be establishing the binding relationship between the electronic devices by using setting entries of the electronic devices, or may be establishing the binding relationship between the electronic devices by using hyper terminal entries of the electronic devices, or may be establishing the binding relationship between the electronic devices in another manner. This is not limited in this application.

Optionally, the electronic device A may be any one of a mobile phone, a tablet computer, a smart television, and a wearable smart device, or may be another electronic device. This is not limited in this application.

Similarly, the electronic device B or the electronic device C may be any one of a mobile phone, a tablet computer, a smart television, and a wearable smart device, or may be another electronic device. This is not limited in this application.

It should be understood that the APP page corresponding to the message notification is specified by the APP on the electronic device A when the APP sends the message notification. For example, in this embodiment, the message notification is sent by the information APP on the electronic device A, and the APP page corresponding to the message notification is the information page. In other words, the information page is specified by the information APP on the electronic device A when the information APP sends the message notification.

It should be understood that, in this embodiment, the message notifications displayed on the electronic device B and the electronic device C may also be referred to as proxy message notifications. Content of the proxy message notifications is completely the same as content of the message notification corresponding to the proxy message notifications. Differences lie in that display carriers are different. In this embodiment, a carrier of the message notification is the electronic device A, and carriers of the proxy message notifications are the electronic device B and the electronic device C. In addition, the display forms of the proxy message notifications may be different from the display form of the message notification. For example, if the display form of the message notification is a pop-up message notification, the display forms of the proxy message notifications may alternatively be notification bar message notifications or floating message notifications.

It should be understood that, in this embodiment of this application, electronic devices bound to the electronic device A are the electronic device B and the electronic device C. However, the electronic device B and the electronic device C in this embodiment of this application may generally refer to all electronic devices that establish binding relationships with the electronic device A and that are in an online state (connected to a same local area network). In other words, if the electronic device A establishes a binding relationship with N (N is a positive integer greater than or equal to 1) electronic devices and all the electronic devices are all in the online state, the electronic device A can implement message synchronization with the N electronic devices. In addition, the user may trigger task migration with the electronic device A by tapping a proxy message notification on any one of the N electronic devices.

In addition, when the user triggers task migration with the electronic device A by tapping the proxy message notification on the any one of the N electronic devices, the message notification displayed on the electronic device A and proxy message notifications displayed on the N electronic devices are automatically deleted. Alternatively, when the user is using the electronic device A, the user taps the message notification displayed on the electronic device A, and a procedure of automatically deleting the message notification displayed on the electronic device A and the proxy message notifications displayed on the N electronic devices is also triggered.

In embodiments of this application, when a binding relationship is established between the electronic device A and a plurality of electronic devices and all the electronic devices are in the online state, when the user is using any one of the plurality of electronic devices, if the APP on the electronic device A sends the message notification, the plurality of electronic devices can synchronously receive the message notification, and the user can trigger task migration with the electronic device A by tapping the message notification on the any one of the plurality of electronic devices. In this way, the APP page corresponding to the message notification is displayed on a display interface of the any electronic device, so that the message notification is further processed on the any electronic device. After the user taps the message notification to trigger task migration, the message notifications on the electronic device A and the plurality of electronic devices are automatically deleted. In this way, the user can view a message notification on another device in time, and can initiate a task migration procedure by using the message notification as an entry, so that task migration between the devices no longer depends on a task center entry, and after the task migration procedure is triggered, the message notifications on all the devices are further deleted in time. This improves user experience.

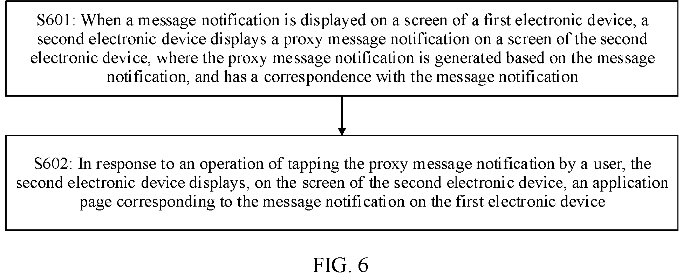

FIG. 6 is a schematic flowchart of a task migration method 600 according to an embodiment of this application. As shown in FIG. 6, the method 600 includes the following steps.

Step S601: When a message notification is displayed on a screen of a first electronic device, a second electronic device displays a proxy message notification on a screen of the second electronic device, where the proxy message notification is generated based on the message notification, and has a correspondence with the message notification.

Optionally, content of the proxy message notification is the same as content of the message notification.

Optionally, a display form of the proxy message notification may be different from a display form of the message notification. For example, if the display form of the message notification is a pop-up window form, the display form of the proxy message notification may alternatively be a notification bar message notification or a floating message notification.

Optionally, the display forms of the proxy message notification and the message notification may be related to a situation in which a user currently uses the electronic device. For example, if the user is currently using a video function of the electronic device, the message notification/proxy message notification of the electronic device is preferably displayed in a notification bar form.

It should be understood that a binding relationship is established between the first electronic device and the second electronic device, and the first electronic device and the second electronic device are in an online state (connected to a same local area network).

Step S602: In response to a first operation of the user, the second electronic device displays, on the screen of the second electronic device, an application APP page corresponding to the message notification on the first electronic device, where the first operation is an operation of tapping the proxy message notification.

Optionally, before step S602, the following steps may be further included:
the second electronic device determines whether an object tapped by the user is the proxy message notification; and
when the second electronic device determines that the object tapped by the user is the proxy message notification, the second electronic device further determines that the proxy message notification is from the first electronic device.

In this embodiment of this application, when the user is using the second electronic device, if an APP on the first electronic device sends the message notification, the second electronic device can synchronously receive the message notification (the proxy message notification). In addition, the user can trigger task migration with the first electronic device by tapping the message notification on the second electronic device, so that the APP page corresponding to the message notification is displayed on the screen of the second electronic device, and the message notification can be further processed on the second electronic device. In this way, the user can not only view a message notification on another device in time, but also initiate a task migration procedure by using the proxy message notification as an entry. This improves user experience.

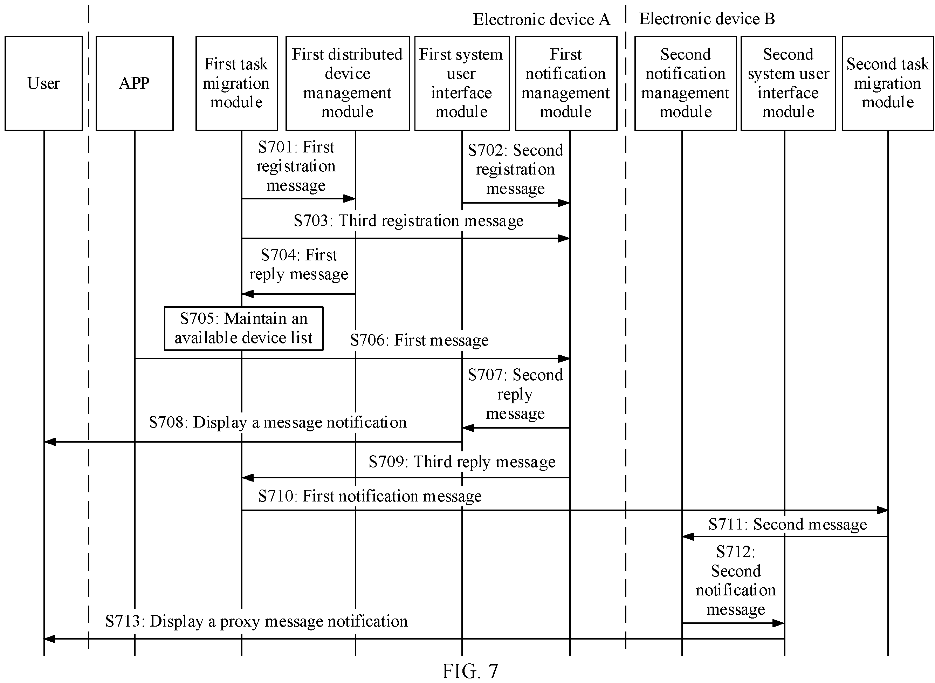

On a basis of the embodiment shown in FIG. 6, for example, FIG. 7 is an information exchange diagram of implementing message notification synchronization between a plurality of electronic devices according to an embodiment of this application. As shown in FIG. 7, for example, message notification synchronization is implemented between an electronic device A and an electronic device B. The electronic device A includes an application APP, a first task migration module, a first distributed device management module, a first system user interface module (first System UI module), and a first notification management module. The electronic device B includes a second task migration module, a second system user interface module (second System UI module), and a second notification management module. The message notification synchronization procedure includes the following steps.

Step S701: The first task migration module sends a first registration message to the first distributed device management module, where the first registration message is used by the first task migration module to register monitoring of on-line/off-line of a bound electronic device with the first distributed device management module.

The bound electronic device is an electronic device that establishes a binding relationship with the electronic device A.

Step S702: The first system UI module sends a second registration message to the first notification management module, where the second registration message is used by the first system UI module to register monitoring of a message notification with the first notification management module.

Step S703: The first task migration module sends a third registration message to the first notification management module, where the third registration message is used by the first task migration module to register monitoring of the message notification with the first notification management module.

Step S704: In response to the first registration message, the first distributed device management module sends a first reply message to the first task migration module, where the first reply message is used to notify the first task migration module of an online or offline condition of an electronic device.

Optionally, that the electronic device is online may mean that the electronic device establishes a binding relationship with the electronic device A, and is connected to a same local area network as the electronic device A; or may mean that the electronic device establishes the binding relationship with the electronic device A, and a distance between the electronic device and the electronic device A is within a coverage range of Bluetooth signals of the two devices; or may mean being in another state in which the electronic device and the electronic device A can communicate with each other. This is not limited in this application.

It should be understood that a binding relationship established between the electronic devices is a logical trust relationship established through user authorization, is triggered by the user and implemented by the system, and is a prerequisite for the electronic devices to be online and offline.

Similarly, that the electronic device is offline refers to a state in which the electronic device establishes the binding relationship with the electronic device A, but cannot communicate with the electronic device A using any medium.

The first reply message may include an ID of an online electronic device and an ID of an offline electronic device.

Step S705: The first task migration module maintains an available device list.

The available device list is a list of an electronic device that establishes a binding relationship with the electronic device A and that is in the online state.

Specifically, when determining, by using the first reply message, that an electronic device is online, the first task migration module stores the online electronic device in the available device list. When determining, by using the first reply message, that an electronic device is offline, the first task migration module removes the offline electronic device from the available device list.

It should be understood that there is no sequence limit on step S701, step S702, and step S703, and there is no sequence limit on step S702, step S703, and step S704.

Step S706: When receiving a message, the APP on the electronic device A creates a message notification, and sends a first message to the first notification management module, where the first message carries the message notification.

Step S707: After receiving the first message, the first notification management module sends a second reply message to the first system UI module in response to the second registration message, where the second reply message is used to notify the first system UI module that a new message notification exists, and the second reply message carries the new message notification.

Optionally, the second reply message may include first indication information, and the first indication information indicates that the new message notification exists.

Optionally, the new message notification may be directly carried or forwarded, or may be carried or forwarded after being encoded and/or encrypted, or may be carried or forwarded after being compressed, or may be carried or forwarded in another manner. This is not limited in this application.

Step S708: After receiving the second reply message, the first system UI module displays the message notification on a screen of the electronic device A.

Optionally, the message notification may be displayed in a notification bar manner, a pop-up window manner, a floating window manner, or another manner. This is not limited in this application.

Optionally, content displayed in the message notification may be, for example, "You have a new SMS message", "You have a new email", or "You have a missed call", or may further include a brief description of notification content related to the message notification. For example, a first line of text of the new SMS message is displayed, a summary of the new email is displayed, or a contact of the missed call is displayed. The content displayed in the message notification may alternatively be other content related to the message notification. This is not limited in this application.

Step S709: In parallel with step S707, after receiving the first message, the first notification management module sends a third reply message to the first task migration module in response to the third registration message, where the third reply message is used to notify the first task migration module that a new message notification exists, and the third reply message carries the new message notification.

Optionally, the third reply message may include second indication information, and the second indication information indicates that the new message notification exists.

Optionally, the new message notification may be directly carried or forwarded, or may be carried or forwarded after being encoded and/or encrypted, or may be carried or forwarded after being compressed, or may be carried or forwarded in another manner. This is not limited in this application.

It should be understood that there is no sequence limit on step S707 and step S709, and step S707 and step S709 may or may not be performed simultaneously.

Step S710: After receiving the third reply message, the first task migration module sends a first notification message to the second task migration module, where the first notification message is used to notify the second task migration module that a proxy message notification exists, the first notification message includes first data, and the first data is data related to the proxy message notification.

Optionally, after receiving the third reply message, the first task migration module may send the first notification message to a server, and then the server sends the first notification message to the second task migration module.

Optionally, the first notification message may include third indication information, and the third indication information indicates that the proxy message notification exists.

Optionally, the first data may include one or more of the following data: data indicating a number of the proxy message notification, data indicating a title of the proxy message notification, data indicating content of the proxy message notification, and data indicating an icon of the proxy message notification. In addition, the first data may further include data indicating other content of the proxy message notification. This is not limited in this application.

It should be understood that content of a proxy message notification described in all embodiments of this application is the same as content of a message notification corresponding to the proxy message notification, and differences lie in that carriers of the proxy message notification and the message notification are different, and a display form of the proxy message notification may be different from a display form of the message notification. For example, if the display form of the message notification is a pop-up message notification, the display form of the proxy message notification may alternatively be a notification bar message notification or a floating message notification.

It should be understood that the electronic device B in this embodiment of this application generally refers to all electronic devices (namely, all devices in the available device list) that have a binding relationship with the electronic device A and that are in the online state. After receiving the third reply message, the first task migration module sends the first notification message to task migration modules of all the electronic devices in the available device list.

Step S711: After receiving the first notification message, the second task migration module parses the first data carried in the first notification message, then creates the proxy message notification corresponding to the message notification, and then sends a second message to the second notification management module, where the second message carries the proxy message notification.

It should be understood that the content of the proxy message notification is completely the same as the content of the message notification, and a difference lies in that carries of the proxy message notification and the message notification are different. To be specific, the message notification is a message notification displayed on a screen of an original electronic device, and the proxy message notification is a message notification displayed on a screen of another electronic device that is bound to the source electronic device and connected to a same local area network. In addition, a display form of the proxy message notification may be different from a display form of the message notification. For example, if the display form of the message notification is a pop-up message notification, the display form of the proxy message notification may alternatively be a notification bar message notification or a floating message notification.

Step S712: After receiving the second message, the second notification management module sends a second notification message to the second system UI module, where the second notification message is used to notify the second system UI module that the proxy message notification exists, and the second notification message carries the proxy message notification.

Optionally, the second notification message may include fourth indication information, and the fourth indication information indicates that the proxy message notification exists.

Optionally, the proxy message notification may be directly carried or forwarded, or may be carried or forwarded after being encoded and/or encrypted, or may be carried or forwarded after being compressed, or may be carried or forwarded in another manner. This is not limited in this application.

Step S713: After receiving the second notification message, the second system UI module displays, on a screen of the electronic device B, the proxy message notification carried in the second notification message.

In embodiments of this application, a device on-line/off-line monitoring function, a message notification monitoring function, and a message notification forwarding function of the task migration module of the electronic device are used, so that when the electronic device A receives the message notification, the message notification is synchronously displayed on another electronic device that is bound to the electronic device A and that is in the online state. In this way, the message notification can be synchronized between the plurality of electronic devices, so that the user can receive, in time, the message notification on the another electronic device that is bound to the currently used electronic device and that is in the online state. This improves user experience.

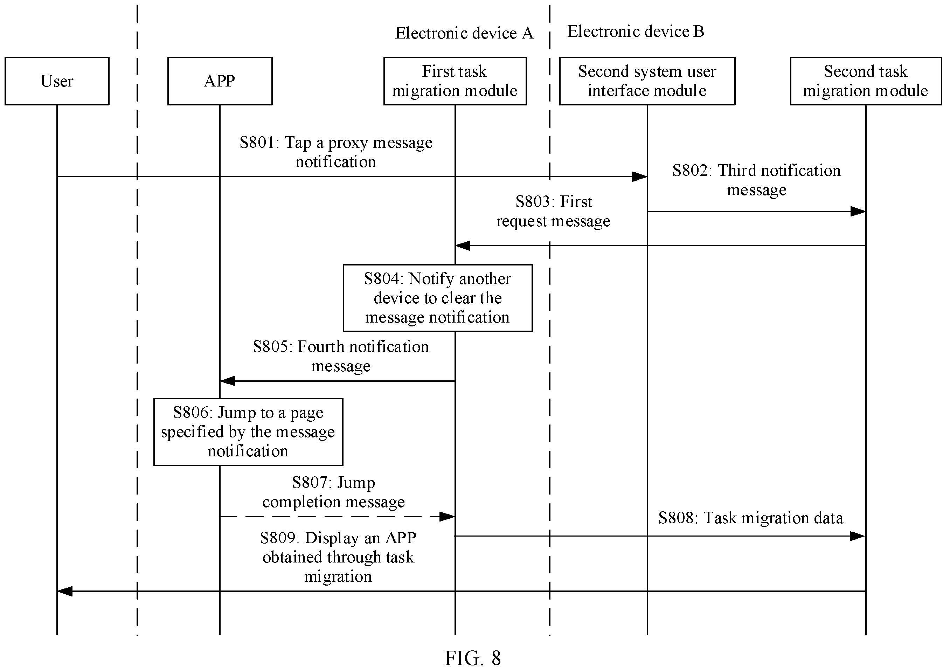

On the basis of the embodiment shown in FIG. 6, and in accordance with the embodiment shown in FIG. 7, for example, FIG. 8 is an information exchange diagram of implementing task migration between electronic devices according to an embodiment of this application. As shown in FIG. 8, task migration between the electronic device A and the electronic device B is used as an example. The task migration procedure includes the following steps.

Step S801: When the user taps the proxy message notification on the electronic device B, the second system UI module identifies that the proxy message notification displayed by the second system UI module is tapped.

Step S802: The second system UI module sends a third notification message to the second task migration module, where the third notification message is used to notify the second task migration module that the proxy message notification is tapped.

Optionally, the third notification message includes identification information of the tapped proxy message notification.

Step S803: After receiving the third notification message, the second task migration module sends a first request message to the first task migration module, where the first request message is used to initiate a task migration request to the first task migration module.

Step S804: After receiving the first request message, the first task migration module notifies another electronic device to delete the message notification.

The another electronic device is all electronic devices other than the electronic device A in the available device list. The available device list is described in detail in the embodiment shown in FIG. 7. For brevity, details are not described herein again.

Step S805: The first task migration module sends a fourth notification message to the APP that sends the message notification on the electronic device A, where the fourth notification message is used to notify the APP that sends the message notification that the message notification is tapped.

It should be understood that, that the message notification is tapped in this step means that the proxy message notification corresponding to the message notification is tapped.

Optionally, the fourth notification message includes identification information of the tapped message notification.

The tapped message notification in step S805 is the message notification corresponding to the tapped proxy message notification in step S802. The content of the proxy message notification and the message notification is consistent, and the differences lie in that the carriers of the proxy message notification and the message notification are different, and the display form of the proxy message notification may be different from the display form of the message notification. For example, if the display form of the message notification is the pop-up message notification, the display form of the proxy message notification may alternatively be the notification bar message notification or the floating message notification.

Step S806: In response to the received fourth notification message, the APP that sends the message notification jumps to an APP page specified by/corresponding to the message notification.

Step S806 may alternatively be as follows: In response to the received fourth notification message/in response to an operation of tapping, by the user, the proxy message notification displayed on the screen of the electronic device B, the electronic device A creates the application APP page corresponding to the message notification on the electronic device A.

Optionally, when the APP is in a started state on the electronic device A, the electronic device A controls the APP to jump to the APP page specified by/corresponding to the message notification, and displays the APP page.

That the electronic device A is in an on state means that an operation interface corresponding to the APP is being displayed on a display of the electronic device A.

Optionally, when the APP is not in the started state on the electronic device A, the electronic device A controls the APP to jump in a background to the APP page specified by/corresponding to the message notification.

That the electronic device A is not in the on state means that the operation interface corresponding to the APP is not displayed on the display of the electronic device A. More specifically, it may mean that the APP is running in the background, or it may mean that the APP is in a closed state and does not run.

For example, when the message notification is an SMS message notification, an APP page specified by/corresponding to the message notification is an SMS message page; or when the message notification is a missed call notification, an APP page specified by/corresponding to the message notification is a call list page.

Step S807: After jump to the page specified by the message notification is completed, the APP that sends the message notification sends a jump completion message to the first task migration module.

It should be understood that step S807 is an optional step.

Optionally, this step may alternatively be as follows: The electronic device A sends a creation completion notification to the electronic device B, where the creation completion notification is used to trigger the electronic device B to display the APP page on the screen of the electronic device B.

Step S808: In response to the jump completion message, the first task migration module sends task migration data to the second task migration module.

Optionally, the task migration data includes descriptive data and control data. The descriptive data includes data indicating a page corresponding to the APP that sends the message notification. The control data includes data indicating a coordinate location tapped by the user.

Optionally, the descriptive data may include data indicating a picture of the page corresponding to the APP that sends the message notification, data indicating a name of the APP, data indicating an icon of the APP, data indicating a version of the APP, and the like.

Step S809: After receiving the task migration data, the second task migration module displays, based on the task migration data, an APP obtained through task migration.

It should be understood that the APP displayed by the electronic device B and obtained through task migration is the same as the APP page to which the electronic device A jumps in step S806 and that is specified by/corresponding to the message notification.

Optionally, when the user finishes using the APP on the electronic device B, the user closes the APP task on the electronic device B. Correspondingly, a state of the APP on the electronic device A is also restored to an original state. For example, before task migration, the APP on the electronic device A is in the started state, and in this case, the APP returns to an original page. For another example, before task migration, the APP on the electronic device A is in the closed state, and in this case, the state of the APP is restored to the closed state.

In addition, it should be understood that, after the user completes an operation and closes the corresponding APP on the electronic device B, the state of the APP on the electronic device A is restored to the original state, but data updated or generated when the user operates the APP on the electronic device B is synchronized to the electronic device A, that is, the user may continue to perform an operation on the electronic device A, as if the device is not replaced in the process.

It should be further understood that there is no sequence limit on step S804 and any one of step S805 to step S809.

In embodiments of this application, when the user receives, on the electronic device B that is being used, the proxy message notification that is synchronized with the message notification of the electronic device A, the user may trigger task migration between the electronic device B and the electronic device A by tapping the proxy message notification. In this way, the message notification on the device A can be viewed in time, and the APP corresponding to the message notification can be further operated directly on the device B. This improves user experience in using a plurality of devices.

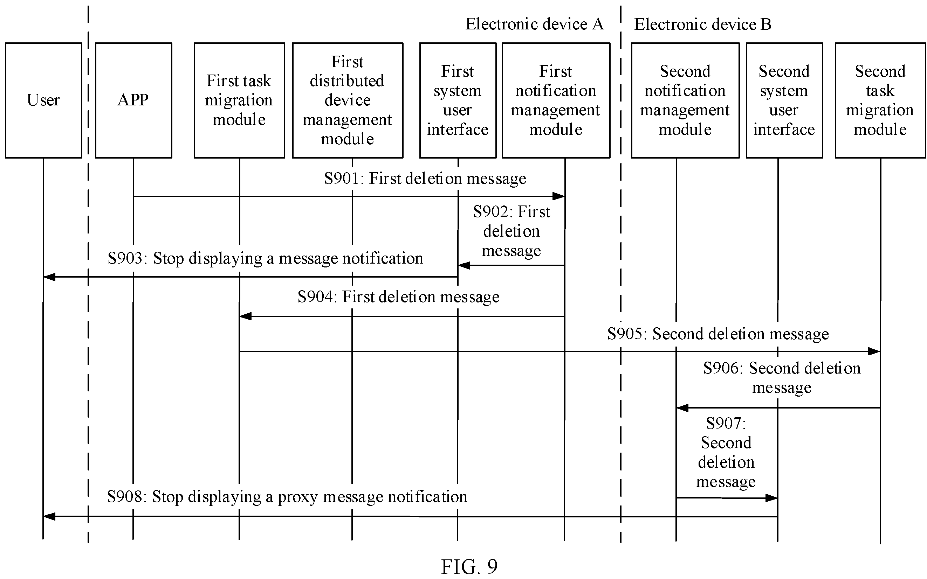

To understand a specific process of step S804 more clearly, for example, FIG. 9 is an information exchange diagram corresponding to a message notification clearing method according to an embodiment of this application. As shown in FIG. 9, the method includes the following steps.

Step S901: After the message notification or the proxy message notification is tapped, the APP that sends the message notification sends a first deletion message to the first notification module, where the first deletion message is used to notify the first notification management module to delete the message notification.

Optionally, the first deletion message includes the identification information of the message notification.

Step S902: After receiving the first deletion message, the first notification management module forwards the first deletion message to the first system UI module.

Step S903: After receiving the first deletion message, the first system UI module stops displaying the message notification on the screen of the electronic device A.

For example, if the message notification is displayed in a pop-up window form, stopping displaying the message notification on the screen of the electronic device A means stopping displaying a corresponding pop-up window; or if the message notification is displayed in a notification bar form, stopping displaying the message notification on the screen of the electronic device A means clearing display of the message notification from a notification bar.

Step S904: The first notification management module forwards the first deletion message to the first task migration module.

It should be understood that there is no sequence limit on step S902 and step S904, and step S902 and step S904 may or may not be performed simultaneously.

Step S905: After receiving the first deletion message, the first task migration module sends a second deletion message to the second task migration module, where the second deletion message is used to notify the second task migration module to delete the proxy message corresponding to the message notification.

Optionally, the second deletion message includes the identification information of the proxy message notification.

Step S906: After receiving the second deletion message, the second task migration module forwards the second deletion message to the second notification management module.

Step S907: After receiving the second deletion message, the second notification management module forwards the second deletion message to the second system UI module.

Step S908: After receiving the second deletion message, the second system UI module stops displaying the proxy message notification on the screen of the electronic device B.

For example, if the proxy message notification is displayed in a pop-up window form, stopping displaying the proxy message notification on the screen of the electronic device B means stopping displaying a corresponding pop-up window; or if the proxy message notification is displayed in a notification bar form, stopping displaying the proxy message notification on the screen of the electronic device B means clearing display of the proxy message notification from a notification bar.

It should be understood that, when the message notification or the proxy message notification is tapped or deleted, the electronic device A traverses the available device list, and sends the first deletion message or the second deletion message to each electronic device in the available device list, so that each electronic device in the available device list deletes the message notification or the proxy message notification displayed by the electronic device (that is, stops displaying the message notification or the proxy message notification on a screen of the electronic device).

It should be understood that, when the user is using the electronic device A, the user taps the message notification displayed on the electronic device A, and a procedure of automatically deleting the message notification displayed on the electronic device A and proxy message notifications displayed on N electronic devices is also triggered.

In embodiments of this application, after the message notification or the proxy message notification is tapped, the message notification or the proxy message notification displayed on the another device can be cleared in time. This avoids unnecessary disturbance to the user, and further improves user experience.

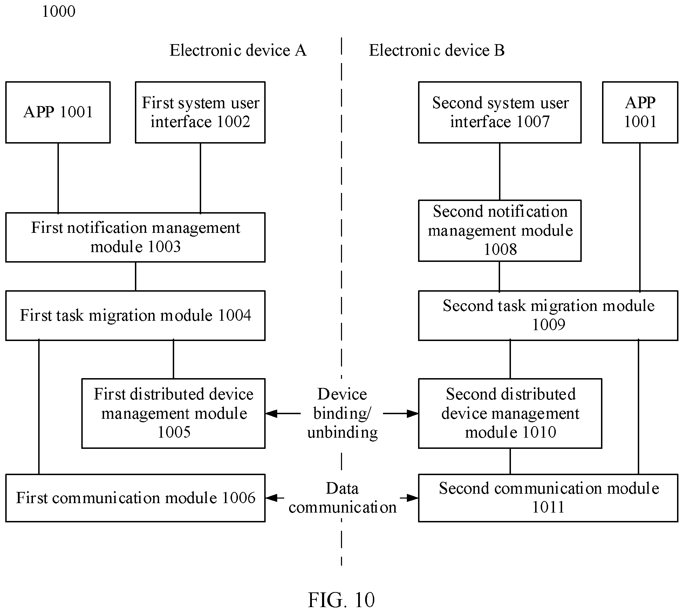

To understand the task migration method provided in this application more clearly, for example, FIG. 10 is a diagram of functional modules of a system 1000 for implementing task migration between devices according to an embodiment of this application. As shown in FIG. 10, the task migration system includes an electronic device A and an electronic device B. The electronic device A includes an application (APP) 1001, a first system user interface module 1002, a first notification management module 1003, a first task migration module 1004, a first distributed device management module 1005, and a first communication module 1006. The electronic device B includes a second system user interface module 1007, a second notification management module 1008, a second task migration module 1009, a second distributed device management module 1010, and a second communication module 1011. Details are as follows.

The application (APP) 1001 is used to receive a message, create a message notification, and send a first message to the first notification management module, where the first message carries the message notification; and is further used to specify a specified notification page that needs to be jumped to after the message notification is tapped.

The application (APP) 1001 is further used to: after receiving a fourth notification message, jump to an APP page specified by/corresponding to the message notification, where the fourth notification message is used to notify the application (APP) 1001 that the message notification is tapped.

Optionally, the application (APP) 1001 is further used to send a jump completion message to the first task migration module after jump to the page specified by the message notification is completed.

The first system user interface module 1002 is configured to send a second registration message to the first notification management module 1003, where the second registration message is used by the first system user interface module 1002 to register monitoring of the message notification with the first notification management module 1003; and is further configured to receive a second reply message sent by the first notification management module 1003, where the second reply message is used to notify the first system UI module that a new message notification exists, and the second reply message carries the new message notification.

Optionally, the second reply message may include first indication information, and the first indication information indicates that the new message notification exists.

The first system user interface module 1002 is further configured to: after receiving the second reply message, display the message notification on a screen of the electronic device A.

The first system user interface module 1002 is further configured to receive a first deletion message sent by the first notification management module, where the first deletion message is used to notify the first notification management module to delete the message notification; and is further configured to: after receiving the first deletion message, stop displaying the message notification on the screen of electronic device A. The explanation of stopping displaying the message notification is described in detail in step S903. For brevity, details are not described herein again.

Optionally, the first deletion message includes identification information of the message notification.

The first notification management module 1003 is configured to: provide a message notification creation and deletion interface for the APP, and provide a message notification monitoring interface for the first system user interface module 1002, the first task migration module 1004, and the like. Details are as follows.

The first notification management module 1003 is configured to receive the second registration message sent by the first system user interface module 1002, and is further configured to receive a third registration message sent by the first task migration module 1004, where the third registration message is used to register monitoring of the message notification with the first notification management module 1003.

The first notification management module 1003 is further configured to: receive the message notification sent by the application (APP) 1001, and after receiving the message notification, send the second reply message to the first system user interface module 1002 in response to the second registration message, where the second reply message is used to notify the first system user interface module 1002 that the new message notification exists, and the second reply message carries the new message notification; and/or send a third reply message to the first task migration module 1004 in response to the third registration message, where the third reply message is used to notify the first task migration module that the new message notification exists, and the third reply message carries the new message notification.

The first notification management module 1003 is further configured to: receive the first deletion message sent by the application (APP) 1001, and after receiving the first deletion message, forward the first deletion message to the first system user interface module 1002 and the first task migration module 1004.

The first task migration module 1004 is configured to send a first registration message to the first distributed device management module 1005, where the first registration message is used to register monitoring of on-line/off-line of a bound electronic device with the first distributed device management module 1005; and is further configured to receive a first reply message in response to the first registration message, where the first reply message is used to notify the first task migration module 1004 of an online or offline condition of an electronic device.

The first task migration module 1004 is further configured to send a third registration message to the first notification management module 1003.

The first task migration module 1004 is further configured to maintain an available device list.

The available device list is a list of an electronic device that establishes a binding relationship with the electronic device A and that is in an online state.

Specifically, when determining, by using the first reply message, that an electronic device is online, the first task migration module 1004 stores the online electronic device in the available device list. When determining, by using the first reply message, that an electronic device is offline, the first task migration module 1004 removes the offline electronic device from the available device list.

The first task migration module 1004 is further configured to receive the third reply message sent by the first notification management module 1003, where the third reply message is used to notify the first task migration module 1004 that the new message notification exists, and the third reply message carries the new message notification; and is further configured to send a first notification message to the second task migration module 1009 after receiving the third reply message, where the first notification message is used to notify the second task migration module 1009 that a proxy message notification exists, the first notification message includes first data, and the first data is data related to the proxy message notification.

Optionally, the first data may include one or more of the following data: data indicating a number of the proxy message notification, data indicating a title of the proxy message notification, data indicating content of the proxy message notification, and data indicating an icon of the proxy message notification. In addition, the first data may further include data indicating other content of the proxy message notification. This is not limited in this application.

It should be understood that content of a proxy message notification described in all embodiments of this application is the same as content of a message notification corresponding to the proxy message notification, and differences lie in that carriers of the proxy message notification and the message notification are different, and a display form of the proxy message notification may be different from a display form of the message notification. For example, if the display form of the message notification is a pop-up message notification, the display form of the proxy message notification may alternatively be a notification bar message notification or a floating message notification.

It should be understood that the electronic device B in this embodiment of this application generally refers to all electronic devices (namely, all devices in the available device list) that have a binding relationship with the electronic device A and that are in the online state. After receiving the third reply message, the first task migration module 904 sends the first notification message to task migration modules of all the electronic devices in the available device list.

The first task migration module 1004 is further configured to receive a first request message sent by the second task migration module 1009, where the first request message is used to initiate a task migration request to the first task migration module 1004. The first task migration module 1004 is further configured to: after receiving the first request message, notify another electronic device to delete the message notification.

The first task migration module 1004 is further configured to send a fourth notification message to the application (APP) 1001, where the fourth notification message is used to notify that the message notification is tapped; and is further configured to send task migration data to the second task migration module 1009 after receiving a jump completion notification.

Optionally, the task migration data includes descriptive data and control data. The descriptive data includes data indicating a page corresponding to the APP that sends the message notification. The control data includes data indicating a coordinate location tapped by the user.

Optionally, the descriptive data may include data indicating a picture of the page corresponding to the APP that sends the message notification, data indicating a name of the APP, data indicating an icon of the APP, data indicating a version of the APP, and the like.

Optionally, the fourth notification message includes identification information of the tapped message notification.

The first task migration module 1004 is further configured to: receive the first deletion message sent by the first notification management module 1003, and send a second deletion message to the second task migration module 1009 after receiving the first deletion message, where the second deletion message is used to notify the second task migration module to delete the proxy message corresponding to the message notification.

Optionally, the second deletion message includes identification information of the proxy message notification.

The first distributed device management module 1005 is configured to: bind with a trust relationship of the electronic device B, and provide a device on-line/off-line monitoring interface for the electronic device A. Specifically, the first distributed device management module 1005 is configured to receive the first registration message sent by the first task migration module 1004, and is further configured to send the first reply message to the first task migration module 1004 in response to the first registration message, where the first reply message is used to notify the first task migration module 1004 of the online or offline condition of the electronic device.

The first communication module 1006 is configured to implement data communication with the electronic device B.

Optionally, the first communication module 1006 may be a Bluetooth module, or may be a Wi-Fi module. In other words, the electronic device A may communicate with the electronic device B by using Bluetooth, or may communicate with the electronic device B by using Wi-Fi.

The second system user interface module 1007 is configured to receive a second notification message sent by the second notification management module 1008, where the second notification message is used to notify the second system user interface module 1007 that the proxy message notification exists, and the second notification message carries the proxy message notification; and is further configured to display, on a screen of the electronic device B after receiving the second notification message, the proxy message notification carried in the second notification message.

The second system user interface module 1007 is further configured to send a third notification message to the second task migration module 1009, where the third notification message is used to notify the second task migration module 1009 that the proxy message notification is tapped.

Optionally, the third notification message includes the identification information of the tapped proxy message notification.

The second system user interface module 1007 is further configured to receive the second deletion message, and is further configured to: after receiving the second deletion message, stop displaying the proxy message notification on the screen of the electronic device B.

The second notification management module 1008 is configured to receive a second message sent by the second task migration module 1009, where the second message carries the proxy message notification; and is further configured to send the second notification message to the second system user interface module 1007 after receiving the second message.

The second notification management module 1008 is further configured to receive the second deletion message sent by the second task migration module 1009, and is further configured to forward the second deletion message to the second system user interface module 1007 after receiving the second deletion message.

The second task migration module 1009 is configured to receive the first notification message sent by the first task migration module 1004, and is further configured to: after receiving the first notification message, parse the first data carried in the first notification message, then create the proxy message notification, and then send the second message to the second notification management module 1008, where the second message carries the proxy message notification.

The second task migration module 1009 is further configured to receive the third notification message sent by the second system user interface module 1007, where the third notification message is used to notify the second task migration module that the proxy message notification is tapped; and is further configured to send the first request message to the first task migration module 1004 after receiving the third notification message, where the first request message is used to initiate the task migration request to the first task migration module 1004.

The second task migration module 1009 is further configured to receive the task migration data sent by the first task migration module 1004, and is further configured to: after receiving the task migration data, display, based on the task migration data, an APP obtained through task migration.

The second task migration module 1009 is further configured to receive the second deletion message sent by the first task migration module 1004, where the second deletion message is used to indicate to delete the proxy message notification; and is further configured to forward the second deletion message to the second notification management module 1008 after receiving the second deletion message.

The second deletion message is used to notify the second task migration module 1009 to delete the proxy message corresponding to the message notification.

Optionally, the second deletion message includes the identification information of the proxy message notification.

The second distributed device management module 1010 is configured to: bind with a trust relationship of the electronic device A, and provide a device on-line/off-line monitoring interface for the electronic device B.

The second communication module 1011 is configured to implement data communication with the electronic device A.

Optionally, the second communication module 1011 may be a Bluetooth module, or may be a Wi-Fi module. In other words, the electronic device B may communicate with the electronic device A by using Bluetooth, or may communicate with the electronic device A by using Wi-Fi.

Optionally, the electronic device further includes a determining module, configured to: before responding to an operation of tapping the proxy message notification by the user, determine whether an object tapped by the user is the proxy message notification; and further configured to: when determining that the object tapped by the user is the proxy message notification, further determine that the proxy message notification is from the first electronic device.

It should be understood that the electronic device A in this embodiment of this application may refer to an original electronic device that sends the message notification, and the electronic device B generally refers to another electronic device that has a binding relationship with the original electronic device and that is in the online state.

In embodiments of this application, the task migration module is extended, so that the task migration module has functions of device on-line/off-line monitoring and message notification monitoring, and further has a capability of forwarding the proxy message notification. In this way, even if the application that is not in a running state on the electronic device A receives the message notification, the electronic device B also synchronously receives the message notification (proxy message notification), so that message synchronization between a plurality of electronic devices is implemented, and the user can view the message notification on the electronic device A in time when using the electronic device B. In addition, the user may trigger task migration between the electronic device B and the electronic device A by tapping the proxy message notification displayed on the electronic device B, and can directly further operate, on the electronic device B, the APP corresponding to the message notification. In this way, an entry of a task migration function between the devices is no longer limited to a task center, and experience of using the plurality of devices by the user is improved. In addition, after the message notification or the proxy message notification is tapped, the message notification or the proxy message notification displayed on the another electronic device can be cleared in time, to avoid unnecessary disturbance to the user and further improve user experience.

In addition, in embodiments of this application, when the user triggers task migration between the devices by tapping the proxy message, it is first determined whether the object tapped by the user is the proxy message notification. When it is determined that the tapped object is the proxy message notification, a source device of the proxy message notification is further determined. In this way, task migration between the devices that is initiated due to incorrect identification of the device can be avoided, security performance of a migration process can be improved, and user experience can be further improved.

One or more of the modules or units described in this specification may be implemented by software, hardware, or a combination of software and hardware. When any one of the foregoing modules or units is implemented by software, the software exists in a form of computer program instructions, and is stored in a memory. A processor may be configured to execute the program instructions and implement the foregoing method procedure. The processor may include but is not limited to at least one of the following computing devices that run software: a central processing unit (central processing unit, CPU), a microprocessor, a digital signal processor (DSP), a microcontroller unit (microcontroller unit, MCU), an artificial intelligence processor, and the like. Each computing device may include one or more cores configured to execute software instructions to perform an operation or processing. The processor may be built in a SoC (system on chip) or an application-specific integrated circuit (application-specific integrated circuit, ASIC), or may be an independent semiconductor chip. In addition to the core configured to execute the software instructions to perform the operation or processing, the processor may further include a necessary hardware accelerator, for example, a field programmable gate array (field programmable gate array, FPGA), a PLD (programmable logic device), or a logic circuit that implements a dedicated logic operation.

When the modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software to execute the foregoing method procedure or execute the foregoing method procedure without software.

When the modules or units described in this specification are implemented by software, all or some of the modules or units may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and method steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiment. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on an actual requirement, to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A task migration method, wherein the method comprises:
displaying, by a second electronic device, a proxy message notification on a screen of the second electronic device in response to displaying a message notification on a screen of a first electronic device, wherein the proxy message notification is generated based on the message notification, and has a correspondence with the message notification; and
displaying, by the second electronic device on the screen of the second electronic device in response to an operation of tapping the proxy message notification by a user, an application APP page corresponding to the message notification on the first electronic device.

2. The method according to claim 1, wherein the displaying, by the second electronic device on the screen of the second electronic device in response to an operation of tapping the proxy message notification by a user, an application APP page corresponding to the message notification on the first electronic device comprises:
sending, by the second electronic device, a first request message to the first electronic device in response to the operation of tapping the proxy message notification by the user, wherein the first request message is used to request to initiate task migration with the first electronic device;
receiving, by the second electronic device, task migration data sent by the first electronic device in response to the first request message; and
displaying, by the second electronic device on the screen of the second electronic device based on the task migration data, the application APP page corresponding to the message notification on the first electronic device.

3. The method according to claim 1 or 2, wherein before the displaying, by the second electronic device on the screen of the second electronic device in response to an operation of tapping the proxy message notification by a user, an application APP page corresponding to the message notification on the first electronic device, the method further comprises:
determining, by the second electronic device, whether an object tapped by the user is the proxy message notification; and
when the second electronic device determines that the object tapped by the user is the proxy message notification, further determining, by the second electronic device, that the proxy message notification is from the first electronic device.

4. The method according to any one of claims 1 to 3, wherein the displaying, by a second electronic device, a proxy message notification on a screen of the second electronic device comprises:
receiving, by the second electronic device, a first notification message sent by the first electronic device, wherein the first notification message comprises first data, and the first data is data related to the proxy message notification; and
displaying, by the second electronic device, the proxy message notification on the screen of the second electronic device based on the first notification message.

5. The method according to claim 4, wherein the first notification message comprises first indication information, and the first indication information indicates that the proxy message notification exists.

6. The method according to any one of claims 1 to 5, wherein the method further comprises:
stopping, by the second electronic device in response to the operation of tapping the proxy message notification by the user, displaying the proxy message notification.

7. The method according to claim 6, wherein the stopping, by the second electronic device, displaying the proxy message notification comprises:
receiving, by the second electronic device, a second deletion message sent by the first electronic device, wherein the second deletion message is used to notify the second electronic device to stop displaying the proxy message notification; and
stopping, by the second electronic device in response to the second deletion message, displaying the proxy message notification.

8. The method according to any one of claims 1 to 7, wherein the first electronic device and the second electronic device are bound to each other, and a communication connection is established.

9. The method according to any one of claims 1 to 8, wherein content of the proxy message notification is the same as content of the message notification.

10. The method according to any one of claims 2 to 9, wherein the task migration data comprises descriptive data and control data, the descriptive data comprises data indicating the APP page, and the control data comprises data indicating a coordinate location tapped by the user.

11. A task migration method, wherein the method comprises:
displaying, by a first electronic device, a message notification on a screen of the first electronic device, and triggering displaying a proxy message notification on a screen of a second electronic device, wherein the proxy message notification is generated based on the message notification, and has a correspondence with the message notification; and
creating, by the first electronic device in response to an operation of tapping the proxy message notification by a user, an application APP page corresponding to the message notification on the first electronic device, wherein the APP page is to be displayed by the second electronic device on the screen of the second electronic device.

12. The method according to claim 11, wherein the method further comprises:
receiving, by the first electronic device, a first request message sent by the second electronic device, wherein the first request message is sent by the second electronic device in response to the operation of tapping, by the user, the proxy message notification displayed on the screen of the second electronic device, and the first request message is used to request to initiate task migration with the first electronic device; and
sending, by the first electronic device, task migration data to the second electronic device in response to the first request message, wherein the task migration data is used by the second electronic device to display, on the screen of the second electronic device, the application APP page corresponding to the message notification on the first electronic device.

13. The method according to claim 11 or 12, wherein the method further comprises:
sending, by the first electronic device, a first notification message to the second electronic device in response to displaying, by the first electronic device, the message notification on the screen of the first electronic device, wherein the first notification message is used by the second electronic device to display the proxy message notification on the screen of the second electronic device, the first notification message comprises first data, and the first data is data related to the proxy message notification.

14. The method according to claim 13, wherein the first notification message comprises first indication information, and the first indication information indicates that the proxy message notification exists.

15. The method according to any one of claims 11 to 14, wherein the method further comprises:
stopping, by the first electronic device in response to the operation of tapping the proxy message notification by the user, displaying the message notification.

16. The method according to any one of claims 11 to 15, wherein the method further comprises:
sending, by the first electronic device, a second deletion message to the second electronic device in response to the operation of tapping the proxy message notification by the user, wherein the second deletion message is used to notify the second electronic device to stop displaying the proxy message notification.

17. The method according to any one of claims 12 to 16, wherein before the sending, by the first electronic device, task migration data to the second electronic device, the method further comprises:
when an APP is in a started state on the first electronic device, controlling, by the first electronic device, the APP to jump to the APP page corresponding to the message notification, and displaying the APP page.

18. The method according to any one of claims 12 to 17, wherein before the sending, by the first electronic device, task migration data to the second electronic device, the method further comprises:
when the APP is not in the started state on the first electronic device, starting, by the first electronic device, the APP and jumping to the APP page corresponding to the message notification.

19. The method according to any one of claims 11 to 18, wherein the first electronic device and the second electronic device are bound to each other, and a communication connection is established.

20. The method according to any one of claims 11 to 19, wherein content of the proxy message notification is the same as content of the message notification.

21. The method according to any one of claims 12 to 20, wherein the task migration data comprises descriptive data and control data, the descriptive data comprises data indicating the APP page, and the control data comprises data indicating a coordinate location tapped by the user.

22. An electronic device, wherein the electronic device comprises:
a second system user interface module, configured to display a proxy message notification on a screen of the electronic device in response to displaying a message notification on a screen of a first electronic device, wherein the proxy message notification is generated based on the message notification, and has a correspondence with the message notification; and
a second task migration module, configured to display, on the screen of the electronic device in response to an operation of tapping the proxy message notification by a user, an application APP page corresponding to the message notification on the first electronic device.

23. The electronic device according to claim 22, wherein the electronic device further comprises:
a determining module, configured to: before responding to the operation of tapping the proxy message notification by the user, determine whether an object tapped by the user is the proxy message notification, wherein
the determining module is further configured to: when determining that the object tapped by the user is the proxy message notification, further determine that the proxy message notification is from the first electronic device.

24. An electronic device, wherein the electronic device comprises:
a first system user interface module, configured to: display a message notification on a screen of the electronic device, and trigger displaying a proxy message notification on a screen of a second electronic device, wherein the proxy message notification is generated based on the message notification, and has a correspondence with the message notification; and
an application APP, used to create, in response to an operation of tapping the proxy message notification by a user, an application APP page corresponding to the message notification on the first electronic device, wherein the APP page is to be displayed by the second electronic device on the screen of the second electronic device.

25. The electronic device according to claim 24, wherein the electronic device further comprises:
a first task migration module, configured to receive a first request message sent by the second electronic device, wherein the first request message is sent by the second electronic device in response to the operation of tapping, by the user, the proxy message notification displayed on the screen of the second electronic device, and the first request message is used to request to initiate task migration with the electronic device, wherein
the first task migration module is further configured to send task migration data to the second electronic device in response to the first request message, wherein the task migration data is used by the second electronic device to display, on the screen of the second electronic device, the application APP page corresponding to the message notification on the electronic device.

26. A task migration system, wherein the system comprises:
one or more electronic devices according to claim 22 or 23; and
one or more electronic devices according to claim 23 or 24.

27. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 10 or perform the method according to any one of claims 11 to 21.

28. A computer-readable storage medium, wherein the storage medium stores a program or instructions, and when the program or the instructions are run, the method according to any one of claims 1 to 10 is implemented, or the method according to any one of claims 11 to 21 is implemented.
